# EUROPEAN PATENT SPECIFICATION

(11) **EP 2 375 722 B1**
(45) Date of publication and mention of the grant of the patent: **25.09.2013**
(21) Application number: 11160282.7
(22) Date of filing: 29.03.2011
(51) Int. Cl.: H04N 5/225

(54) **Imaging apparatus**
Abbildungsvorrichtung
Appareil d'imagerie

(30) Priority: 29.03.2010 JP 2010075305
(43) Date of publication of application: 12.10.2011
(73) Proprietor: Ricoh Company, Ltd., Tokyo 143-8555 (JP)
(72) Inventor: Nakajima, Mitsuru, Tokyo Tokyo 143-8555 (JP); Ogata, Tetsuya, Tokyo Tokyo 143-8555 (JP)
(74) Representative: Leeming, John Gerard

(56) References cited:
- EP-A1- 1 696 254
- EP-A2- 2 129 104
- US-A1- 2004 223 074
- US-A1- 2007 292 124
- US-A1- 2009 284 600

## Description

The present invention relates to an imaging apparatus used as a digital camera, a digital video camera, or the like, more specifically, to an imaging apparatus suitable for an in-vehicle camera.

Conventionally, an imaging apparatus including an optical element such as an imaging lens and an image pickup device such as a CCD (Charge Coupled Device) and a CMOS (Complementary Metal Oxide Semiconductor) is generally applied to an in-vehicle camera, a digital camera, a digital video camera, or the like. The imaging apparatus is generally housed in a case in a state where an image to be formed by the optical element (the lens) is positioned so as to be on the image pickup device (a light receiving surface thereof).

Regarding such an imaging apparatus, there is disclosed an imaging apparatus in which the case has a waterproof function and a dustproof function, so that an inside lens (an optical element) and an image pickup device (an electric component for driving of the image pickup device) are protected from water and dust (for example, refer to Japanese Patent Number 3835620). The imaging apparatus in Japanese Patent Number 3835620 has a configuration that a unit, in which a lens and an image pickup device are positioned and fixed, is inserted into a case having a lens opening for exposing the lens at one end and an openable and closable insertion opening for inserting the unit at the other end from the opened insertion opening to be fixed. In the imaging apparatus in Japanese Patent Number 3835620, since a circumference of the lens exposed from the lens opening needs to be sealed, in a state where the unit positioned and fixed while an O-ring is arranged between the lens opening and the lens is inserted from the insertion opening, the unit is fixed to the case by a screw member existing in a direction of a photographing optical axis in the case, and the waterproof and the dustproof are achieved by the O-ring pressing to and contacting with the case and the lens.

However, in the imaging apparatus in Japanese Patent Number 3835620, the unit, in which a positioning fixation of the lens and the image pickup device is completed, is attached to the case, and the case and the lens are pressed to and contacted with each other in the direction of the photographing optical axis, and thereby a sealing capability by means of the O-ring is ensured. Therefore, it is necessary to enable a fixation operation (a tightening operation), in the direction of the photographing optical axis, relative to a screw member to be engaged at an engagement part in the positioned and fixed unit. Here, since downsizing in an imaging apparatus is desired, in the positioned and fixed unit, it is undesirable that the engagement part be at a position protruding relative to a substrate, on which the image pickup device is provided, when viewed in an orthogonal direction to the photographing optical axis, because the imaging apparatus grows in size, Therefore, in the imaging apparatus in Japanese Patent Number 3835620, a portion of a substrate is cut out, and thereby it becomes possible to perform the fixation operation in the direction of the photographing optical axis to the screw member to be engaged at the engagement part in the positioned and fixed unit. However, when a cutout is provided on the portion of the substrate, since a mounting area in the substrate is lowered, the number of the substrate is increased. As a result, the downsizing in the imaging apparatus is interrupted. Further, although it may be also thought that the screw member itself is made to be small and thereby the engagement part in the unit is to be small, pressing and contacting strength of the case and the lens becomes insufficient, and it becomes difficult to ensure the sufficient sealing capability by the O-ring.

Therefore, instead of the configuration such that the case and the lens are pressed to and contacted with each other in the direction of the photographing optical axis and thereby the sealing capability by means of the O-ring is ensured, there is disclosed an imaging apparatus in a configuration such that the optical element such as the lens is retained to be sealed directly by the case (for example, Japanese Patent Laid-Open Publication Number 2009-290527). In the imaging apparatus in Japanese Patent Laid-Open Publication Number 2009-290527, since it is in a configuration such that the sealing capability around the optical element is ensured without the case and the optical element being pressed to and contacted with each other in the direction of the photographing optical axis, the above-mentioned problems due to the engagement part for fixing the unit to the case can be solved.

By the way, in the imaging apparatus in Japanese Patent Laid-Open Publication Number 2009-290527, it is in a configuration such that the substrate, on which the image pickup device is provided, is retained by the case by being screwed with a screw groove provided on an inner circumference surface of the case, the substrate can be moved relative to the optical element in the direction of the photographing optical axis by the substrate being rotated about the photographing optical axis, and a positioning of the optical element and the image pickup device (a focus adjustment) can be performed. Therefore, in the imaging apparatus in Japanese Patent Laid-Open Publication Number 2009-290527, since a positional relationship of the image pickup device relative to the case when viewed in a rotation direction about the photographing optical axis (a rotation position of the image pickup device relative to the case in the rotation direction about the photographing optical axis) is determined in accordance with a position of the image pickup device relative to the optical element in the direction of the photographing optical axis, in a state where a position of an image to be formed by the optical element is positioned so as to be on the image pickup device (a light receiving surface thereof, it is difficult that the rotation position of the image pickup device relative to the case is predetermined.

Here, in the imaging apparatus, it is important in view of product quality that up, down, right and left directions of the case when an external shape thereof is viewed are coincident with those of the obtained image. For example, in a case where the case is in a shape similar to a cube or a rectangular parallelepiped, if the imaging apparatus is disposed so that a bottom surface of the case is at a downside in a vertical direction, it is needed that an up and down directions of the obtained image are coincident with the vertical direction of the object in the image. Therefore, as the imaging apparatus in Japanese Patent Laid-Open Publication Number 2009-290527, in a case where the imaging apparatus is in the configuration such that the rotation position of the image pickup device relative to the case in the rotation direction about the photographing optical axis changes in accordance with a result of positioning, the case in a shape, of which the up, down, right and left directions cannot be specified by an external shape of the case, (for example, a cylindrical shape or a spherical shape) is used, and thereby it is thought that misalignment of the up, down, right and left directions of the obtained image relative to the external shape of the case becomes impossible to bo recognized. However, degree of freedom for designing the case is greatly limited.

US 2004/0223074 A1 discloses an imaging apparatus having an opening of a front casing caulked with a pressure member. An O-ring is used for caulking the front casing and is designed to have an inner diameter larger than the outer diameter of the first lens, and an outer diameter smaller than the inner diameter of the pressure member. When the pressure member is screw fitted, the O-ring is compressed. Thus, a clearance formed by the edge portion of the first lens and the inner wall surface of the pressure member is caulked by the deformation of the O-ring occurring when the O-ring is pressed.

EP 2 129 104 A2 discloses a camera device including: an image pickup element; a substrate mounted with the image pickup element thereon; and a housing accommodating the image pickup element therein. The housing is provided with a plurality of support members which extend upright and to which an external edge portion of the substrate is stuck with an adhesive. The substrate is provided with an application area to which the adhesive is applied, at the external edge portion stuck with the support members.

US 2007/0292124 A1 discloses a camera for a motor vehicle having at least one image converting element. The image converting element includes at least one image sensor and is connected to at least one additional element of the camera. e.g., the housing of the camera, by at least one interlock.

EP 1 696 254 A1 discloses a camera module in which lens frames having lenses are assembled together by stacking. The camera module includes a first lens frame having at least one first lens therein, and at least one second lens frame fastened with the first lens frame. The second lens frame has a second lens fixed therein in optical alignment with the first lens. An image sensor is disposed in the lower portion of the second lens frame to sense an image of an object introduced through the lenses.

US 2009 248 600 A1 shows another example of a camera module.

An object of the present invention is to provide an imaging apparatus capable of obtaining an appropriate optical capability without interrupting downsizing while a sealing capability around an optical element can be easily ensured without lowering degree of freedom for designing a case, in terms of a circumstance mentioned above.

The scope of the invention is defined in the appended claims.
FIG. 1 is a perspective view schematically showing an external shape of an imaging apparatus 10 according to an embodiment of the present invention.
FIG. 2 is a view for an explanation showing the imaging apparatus 10 in

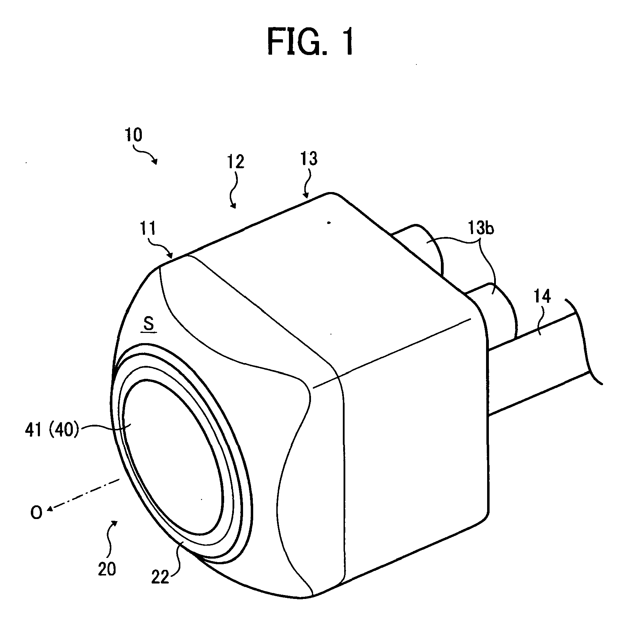

FIG. 1 which is partially broken on a surface including a photographing optical axis O.

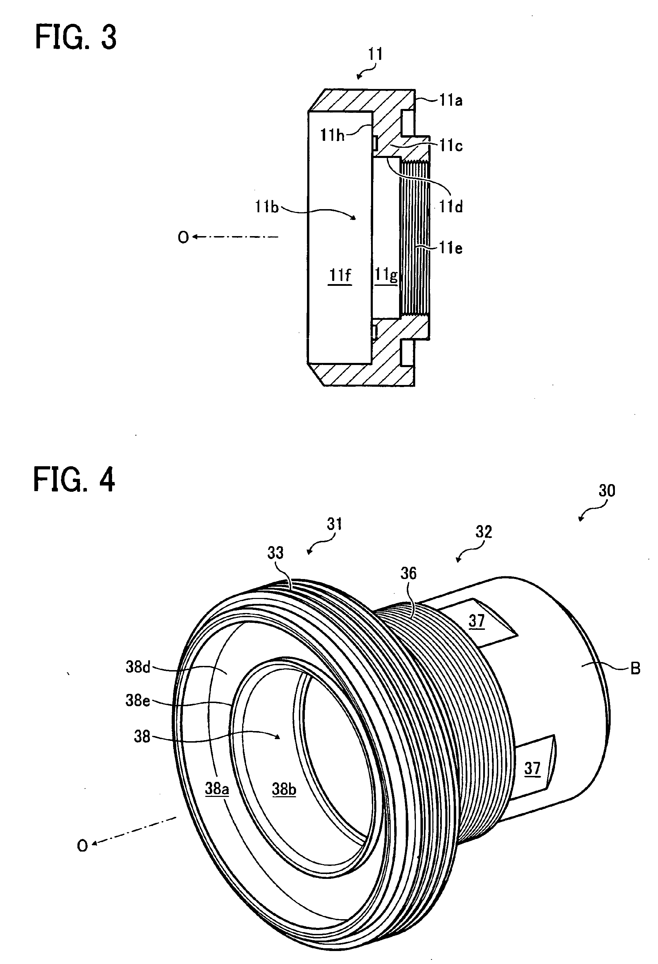

FIG. 3 is a schematic cross-section view for explaining a configuration of a mounting wall portion 11.
FIG. 4 is a schematic perspective view for explaining a configuration of a lens barrel 30.

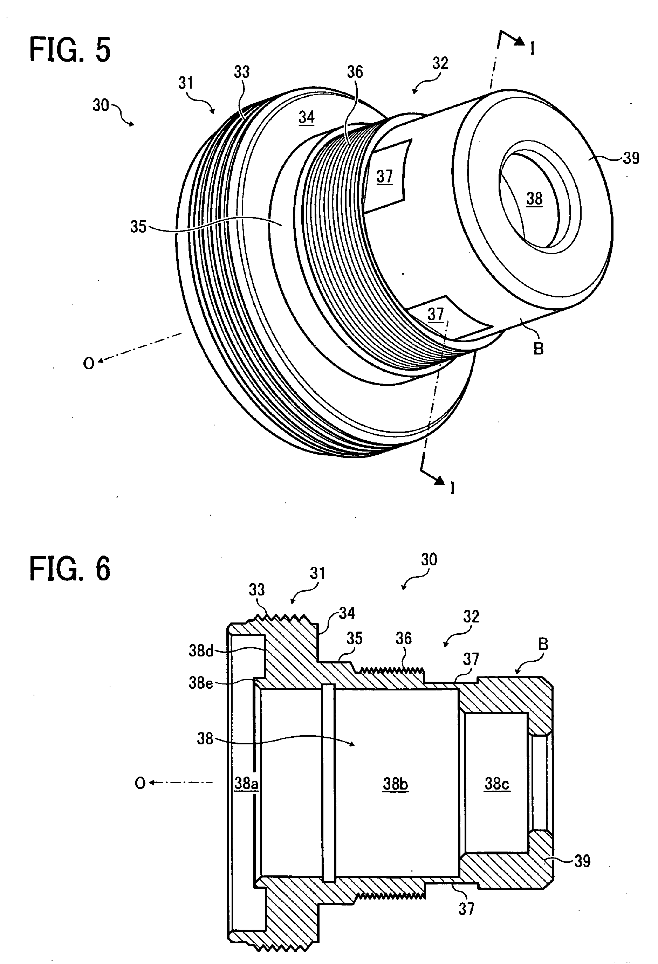

FIG. 5 is a schematic perspective view when the lens barrel 30 is viewed from a back end side thereof (a side of an inner edge projection portion 39) in order to explain the configuration of the lens barrel 30.
FIG. 6 is a schematic cross-section view which is obtained along a line "I-I" in FIG. 5.

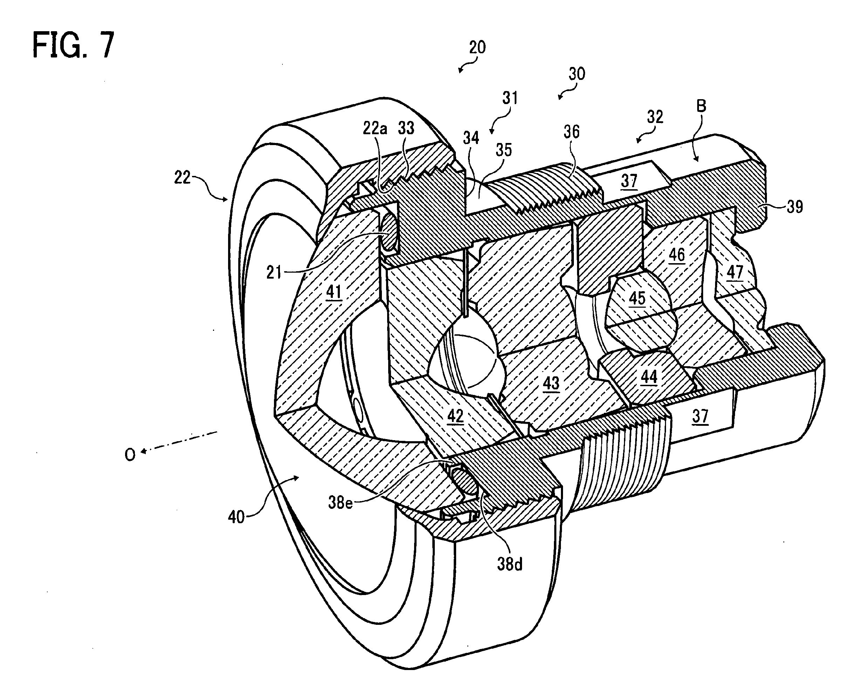

FIG. 7 is a schematic perspective view for explaining a configuration of an imaging optical system 20.

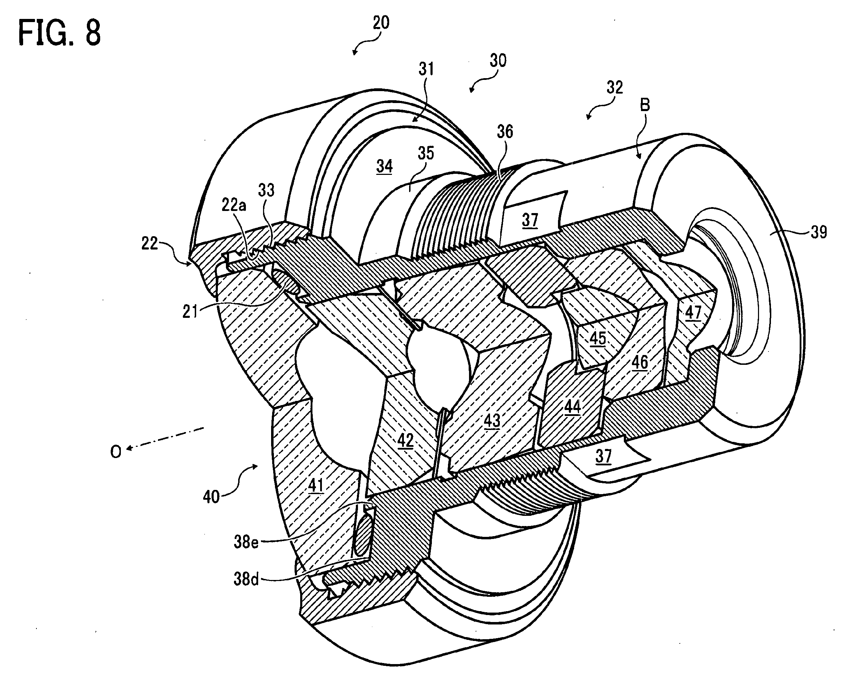

FIG. 8 is a schematic perspective view when the lens barrel 30 is viewed from the back end side thereof (the aide of the inner edge projection portion 39) in order to explain the configuration of the imaging optical system 20.

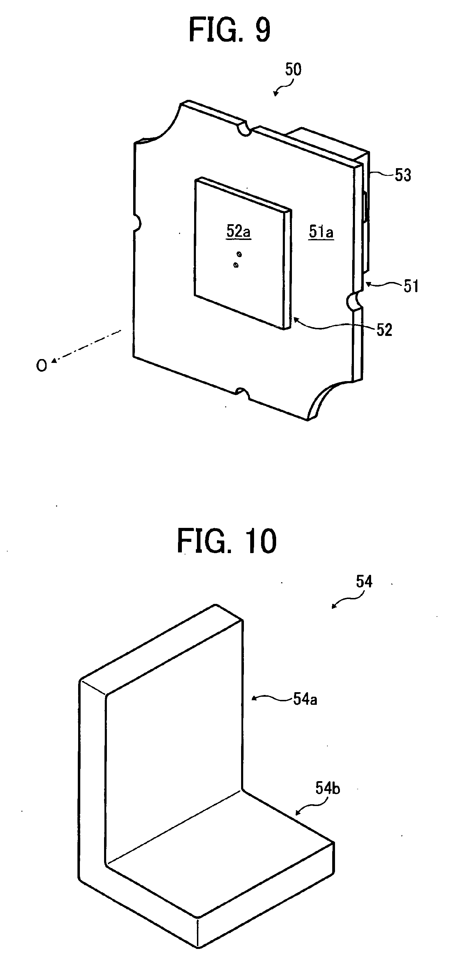

FIG. 9 is a schematic perspective view for explaining a configuration of an electric equipment substrate portion 50.
FIG. 10 is a schematic perspective view for explaining a configuration of an intermediate retaining member 54.

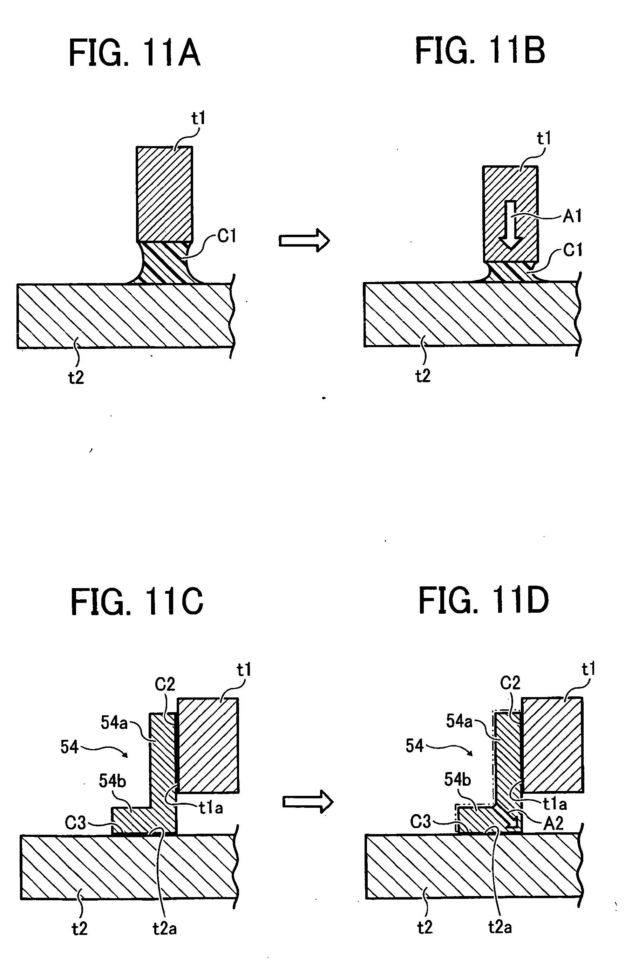

FIGs. 11A to 11D are views for explaining an indirect bond method. FIG. 11A shows an appearance, in which a gap between two positioned members is filled with an adhesive, FIG. 11B shows an appearance, in which both of the two members are out of alignment relative to each other by hardening-shrinking of the adhesive mentioned in FIG. 11A, FIG. 11C shows an appearance, in which two positioned members are bonded to each other by the indirect bond method, and FIG. 11D shows an appearance of both of the two members bonded to each other by the indirect bond method.

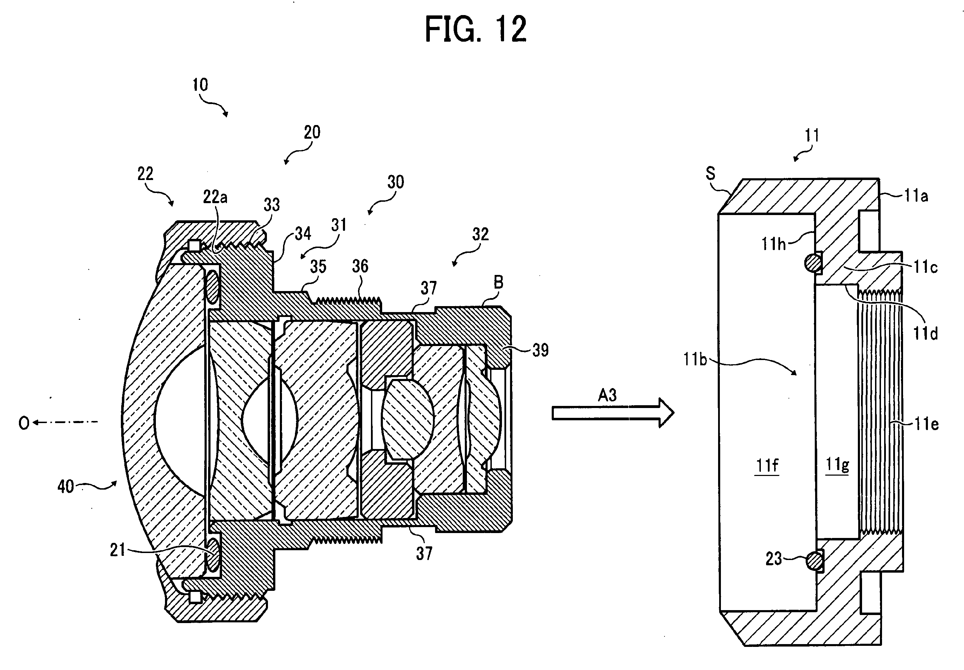

FIG. 12 is a schematic cross-section view showing the imaging apparatus 10 which is broken down into each of members in order to explain an appearance of the provisionally-assembled imaging apparatus 10.

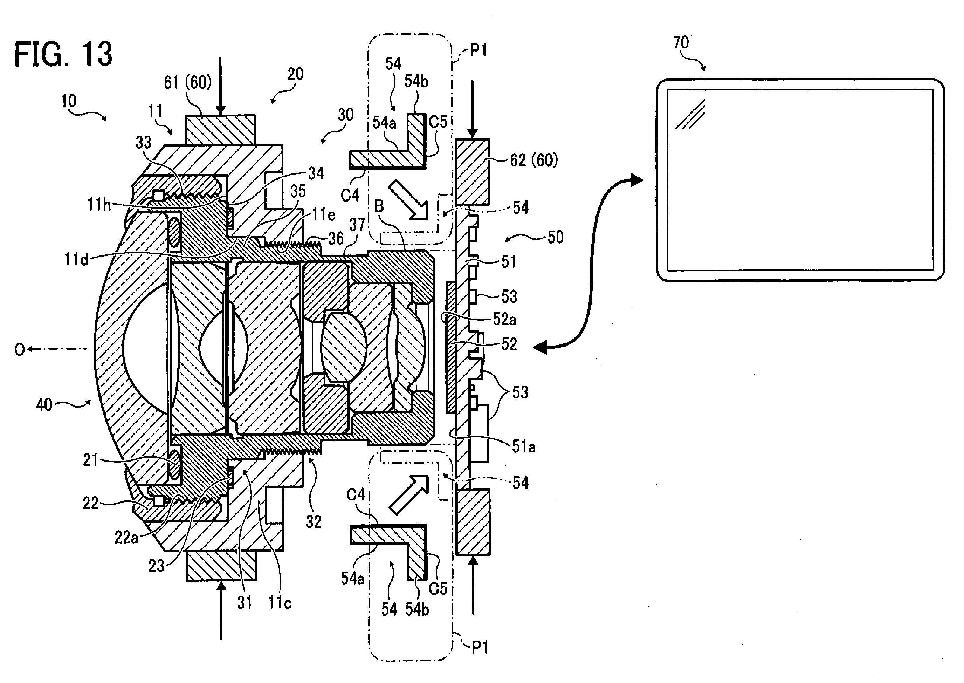

FIG. 13 is a schematic cross-section view for explaining an appearance of a positioning fixation of the imaging apparatus 10.

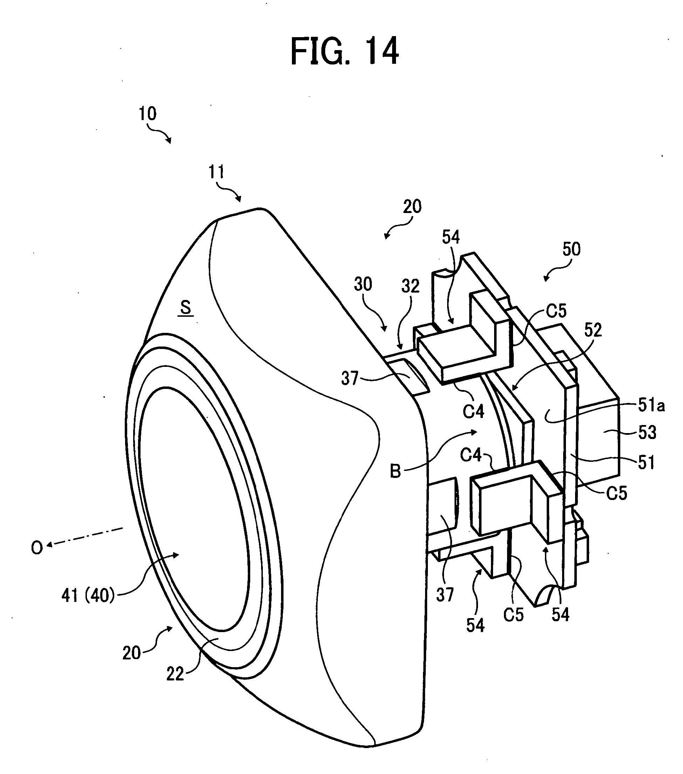

FIG. 14 is a schematic perspective view showing an appearance, in which a substrate 61 is bonded to the lens barrel 30 by the indirect bond method.

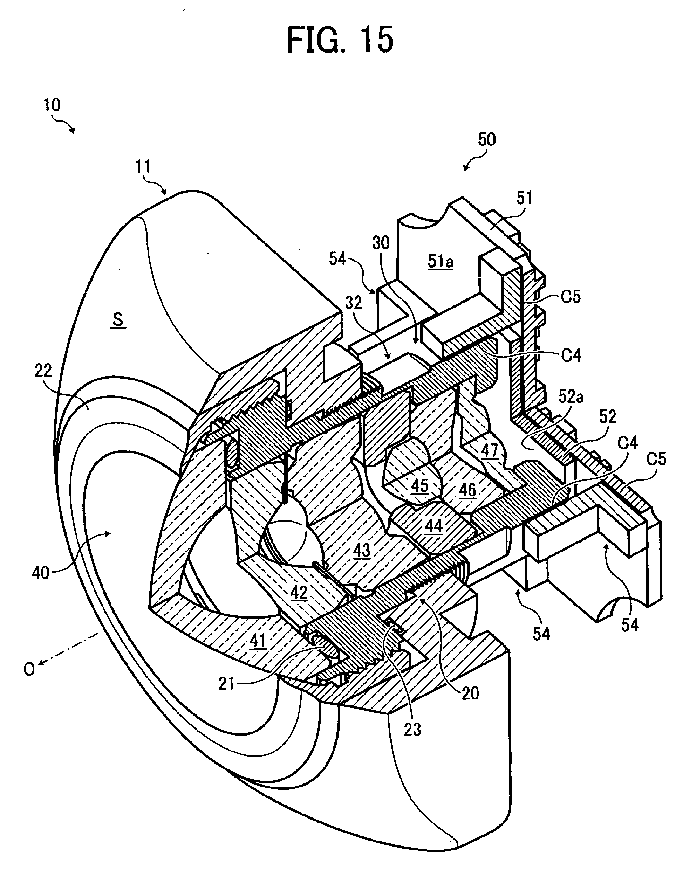

FIG. 15 is a schematic perspective view showing a partially-broken appearance, in which the substrate 51 is bonded to the lens barrel 30 by the indirect bond method.

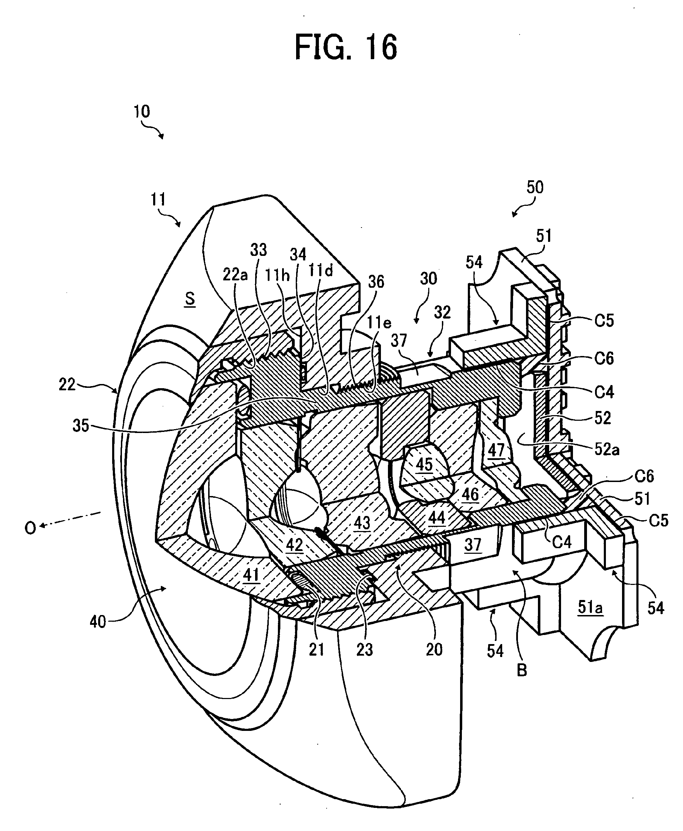

FIG. 16 is a schematic perspective view showing the partially-broken imaging apparatus 10 which is positioned and fixed.

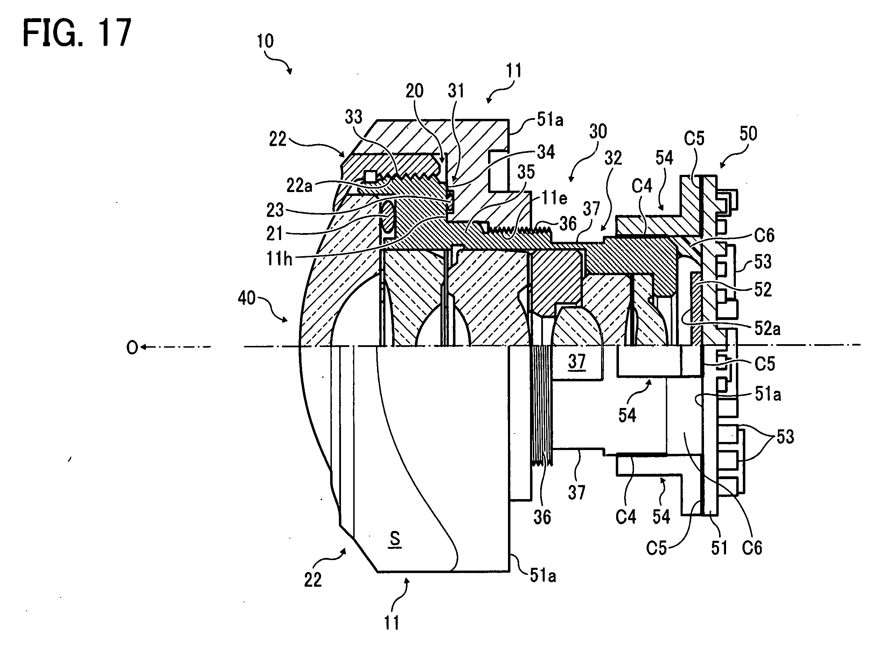

FIG. 17 is a schematic side view showing the partially-broken imaging apparatus 10 which is positioned and fixed.

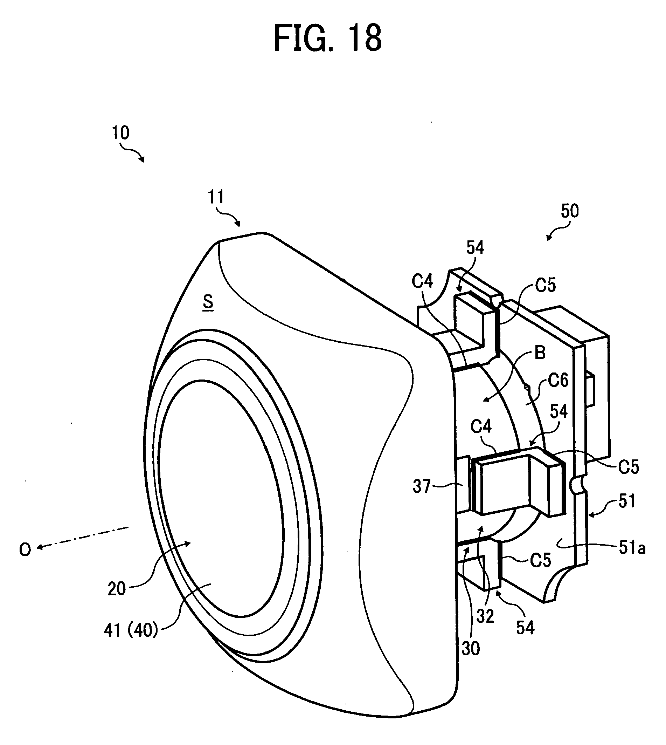

FIG. 18 is a schematic perspective view showing the imaging apparatus 10 which is positioned and fixed.

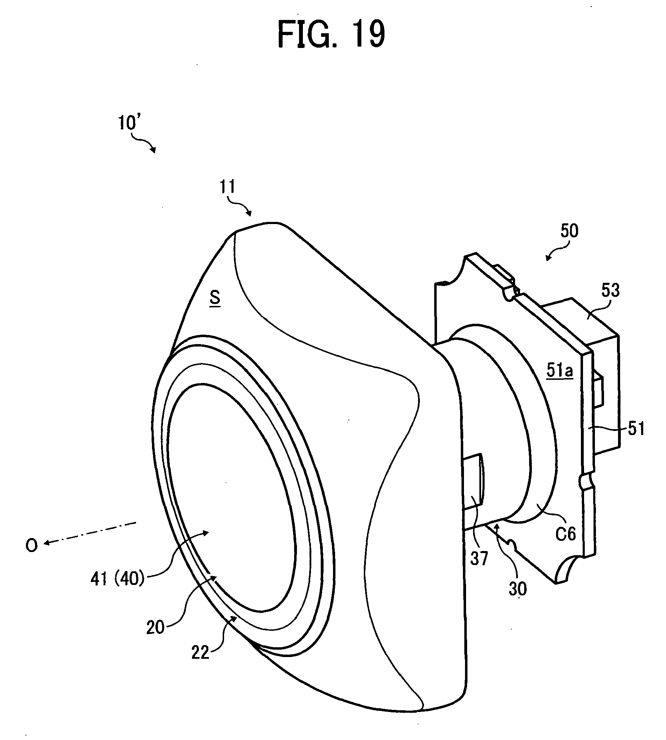

FIG. 19 is a schematic perspective view showing an imaging apparatus 10' which is positioned and fixed by the substrate 51 being bonded to the lens barrel 30 only by a filling bond method.

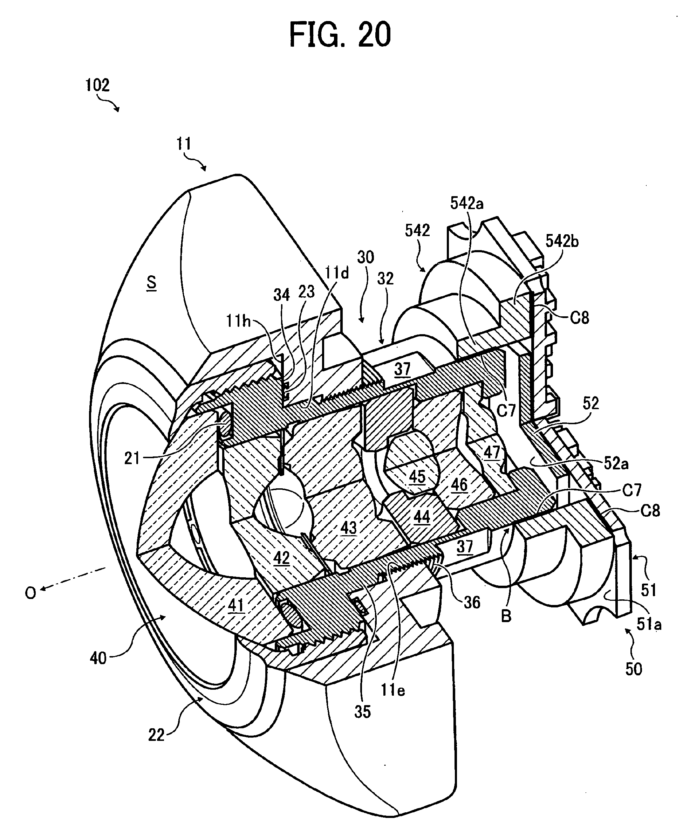

FIG. 20 is a schematic perspective view showing an imaging apparatus 102 according to a second embodiment, which is partially broken, as FIG. 16, for explaining a configuration of the imaging apparatus 102.

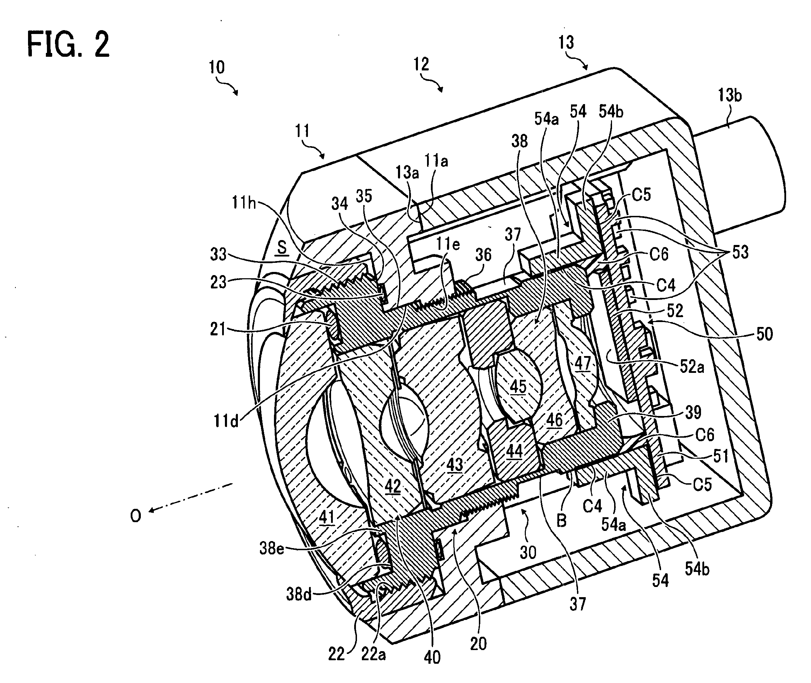

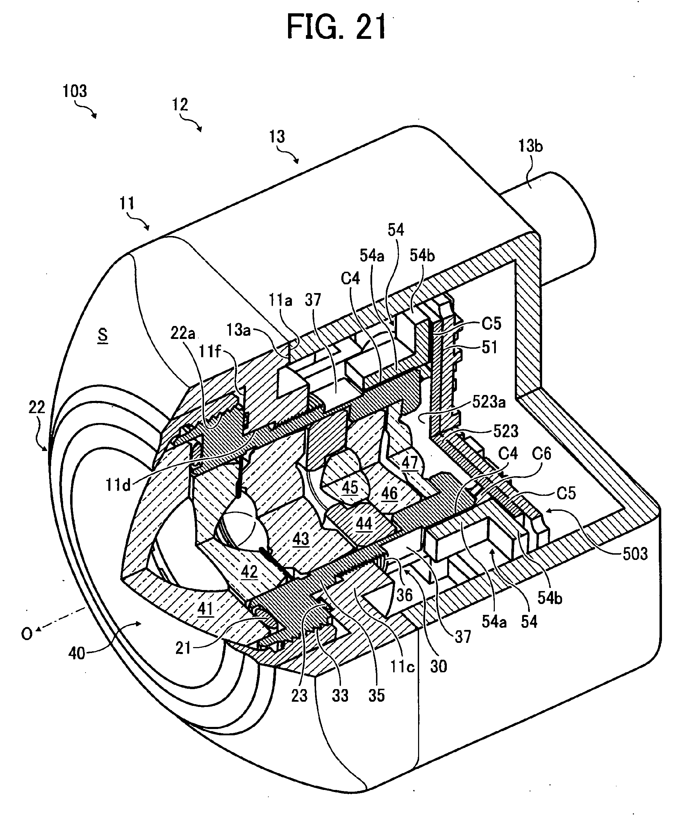

FIG. 21 is a schematic perspective view showing an imaging apparatus 103 according to a third embodiment, which is partially broken, as FIG. 2, for explaining a configuration of the imaging apparatus 103.

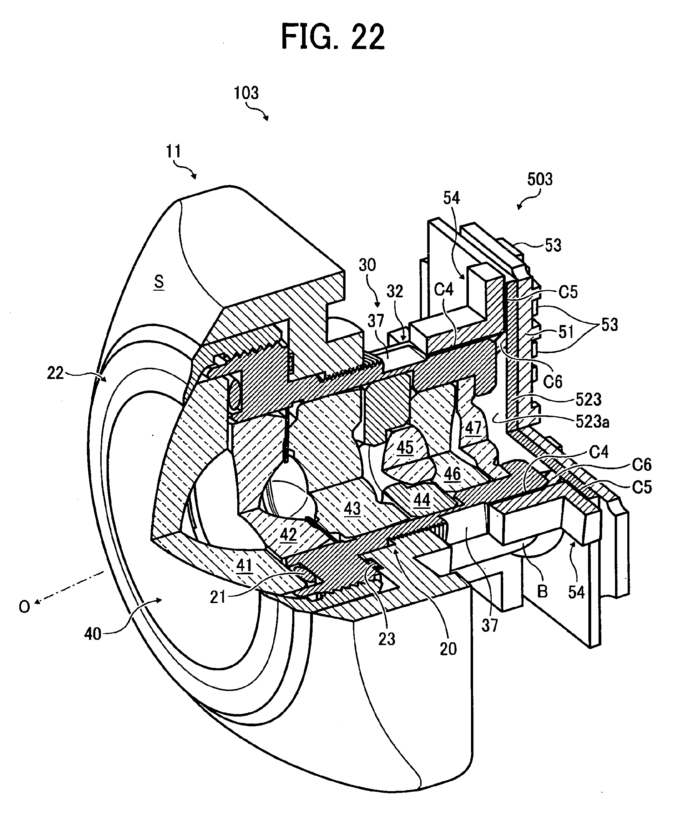

FIG. 22 is a schematic perspective view showing the imaging apparatus 103 according to the third embodiment, which is partially broken, as FIG. 16, for explaining the configuration of the imaging apparatus 103.

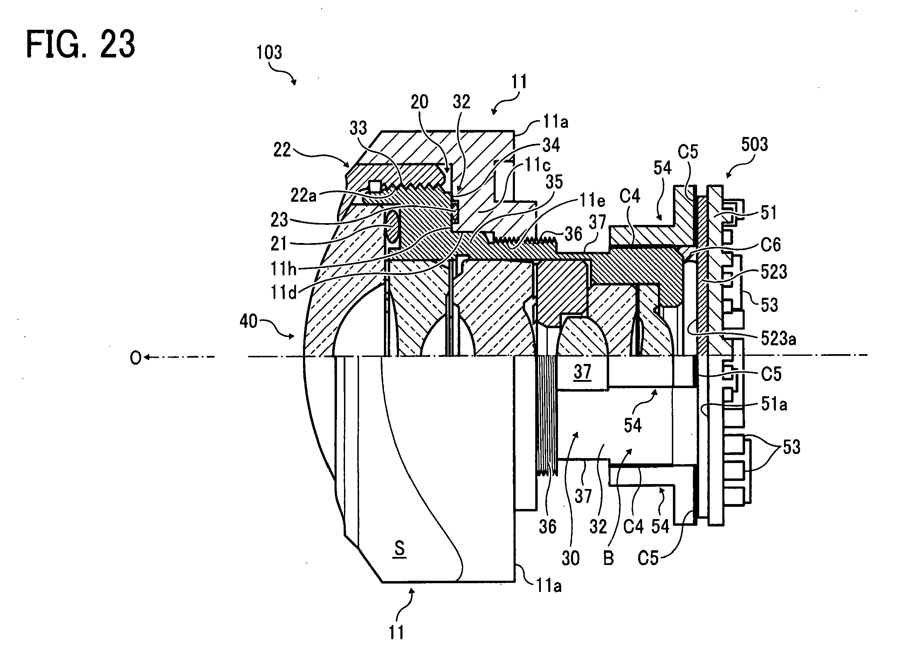

FIG. 23 is a schematic side view showing the imaging apparatus 103 according to the third embodiment, which is partially broken, as FIG. 17, for explaining the configuration of the imaging apparatus 103.

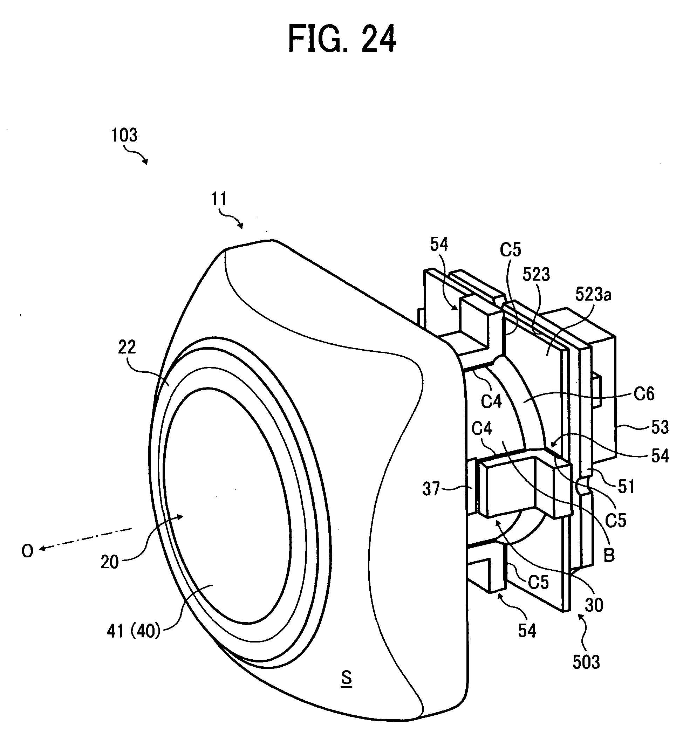

FIG. 24 is a schematic perspective view, as FIG. 18, for explaining the configuration of the imaging apparatus 103 according to the third embodiment.

Hereinafter, preferred embodiments of an imaging apparatus according to the present invention will be explained in detail with reference to the accompanying drawings.

### [First Embodiment]

An imaging apparatus 10 of a first embodiment as an example of an imaging apparatus according to the present invention will be explained with reference to FIGs. 1 to 18.

An imaging apparatus 10 according to an embodiment of the present invention includes, for example, as shown in FIG. 2, at least one optical element, for example, a lens 41 configured to form an image of an object, a lens barrel 30 retaining the at least one optical element, an image pickup device section having an image pickup device 52and configured to obtain the image of the object formed by the at least one optical element, a mounting wall portion 11 surrounding one end portion of the lens barrel 30 at an object side, a lens-barrel side screw groove, that is, a screw groove 36 provided on an outer circumference surface of the lens barrel 30, and a screw fixation section, that is, a positioning surface 11d and a screw groove 11e provided on the mounting wall portion 11 and configured to screw with the lens-barrel side screw groove to fix the lens barrel 30 to the mounting wall portion 11 while pressing the one end portion of the lens barrel 30 to the mounting wall portion 11 in a direction of a photographing optical axis O. The imaging apparatus 10 may further include a bond structure, for example, an intermediate retaining member 54 configured to bond the other end portion of the lens barrel 30 to the image pickup device section in a state where an optically-positional relationship between the image pickup device 52and the at least one optical element is maintained.
The image pickup device section may have a substrate 51 on which the image pickup device 52 is provided, and the bond structure may bond the other end portion of the lens barrel 30 to the substrate 51 of the image pickup device section in a state where the optically-positional relationship between the image pickup device 52and the at least one optical element is maintained.
The bond structure may bond the other end portion of the lens barrel 30 to the image pickup device 52of the image pickup device section in a state where the optically-positional relationship between the image pickup device 52and the at least one optical element is maintained.
The mounting wall portion 11 may have a stepped penetration opening, that is, an insertion opening 11b having two concentric circular shapes when viewed from the object side in the direction of the photographing optical axis O and an orthogonal surface, that is, a front side surface 11h which is orthogonal to the photographing optical axis O at a stepped part of the stepped penetration opening 11b, the lens barrel 30 having a larger external diameter at a side of the one end portion than that at a side of the other end portion may have a stepped external shape and an orthogonal surface 34 which is orthogonal to the photographing optical axis O at a stepped part between the side of the one end portion and the side of the other end portion, and a sealing member may be arranged between the orthogonal surface 11h of the mounting wall portion 11 and the orthogonal surface 34 of the lens barrel 30.
The imaging apparatus may have a box-shaped member, that is, a back-side case portion 13 having one end to be opened and configured to cooperate with the mounting wall portion to be bonded to the mounting wall portion 11 to form a case 12 housing the lens barrel 30 and the image pickup device 52.
An in-vehicle camera may include the imaging apparatus 10.
As shown in FIG. 1 and FIG. 2, the imaging apparatus 10 has a configuration such that the mounting wall portion 11, an imaging optical system 20 (in FIG. 1, only an objective lens (the lens 41) described below of the imaging optical system 20 and a front end portion of an anti-drop member 22 are exposed) and an electric equipment substrate portion 50 as the image pickup device section are mounted.

The mounting wall portion 11 has an object-side surface S at least surrounding a circumference of the objective lens of the imaging optical system 20 (the lens 41 in this embodiment), that is, the one end portion of the lens barrel 30 when viewed in the direction orthogonal to the photographing optical axis O (hereinafter, referred to as a radial direction). The mounting wall portion 11 may be mounted on a desired position in the imaging apparatus 10. In the first embodiment, when the mounting wall portion 11 is viewed in the direction of the photographing optical axis O, a front shape of the mounting wall portion 11 has a rectangular shape, an entirety thereof is in a rectangular parallelepiped shape, and the mounting wall portion 11 constitutes a front side (an object side) portion of the case 12, that is, a front-side case portion. Therefore, the mounting wall portion 11 may be attached to the back-side case portion 13 constituting a back side of the case 12. Although it is not shown, a back end surface 11a of the mounting wall portion 11 is bonded by a screw clamp and the like in contact with a front end surface 13a of the back-side case portion 13 in a state where a sealing member (for example, an O-ring, a flat packing, or the like) is disposed therebetween, and thereby the mounting wall portion 11 forms the case 12 having a waterproof function and a dustproof function at a bonded part of the back end surface 11a and the front end surface 13a (hereinafter, referred to as a sealing capability). When viewed in the direction of the photographing optical axis O, a size of the mounting wall portion 11 is set in accordance with a positional relationship between the mounting wall portion 11 and a narrowed diameter portion 32 of the lens barrel 30 as described below.

As shown FIG. 3, the mounting wall portion 11 has a cylindrical insertion opening 11b into which the lens barrel 30 of the imaging optical system 20 is capable of being inserted in the direction of the photographing optical axis O. In the insertion opening 11b, an inner circumference wall surface of the mounting wall portion 11 protrudes inward to provide an annular shape at a back side (a side of the back-side case portion 13) when the insertion opening 11b is viewed in the direction of the photographing optical axis O, to form an inward protrusion portion 11c, in which a protrusion end portion of the inner circumference wall surface extends to the back side (the side of the back-side case portion 13) in the direction of the photographing optical axis O.

In the inward protrusion portion 11c, an inner wall surface of the front side (the object side) is the positioning surface 11d as a smooth circumference surface centering the photographing optical axis O. The positioning surface 11d has an inner diameter size so as to fit (internally contacting with) a later-described positioning portion 35 of the lens barrel 30 in the mounting wall portion. Further, in the inward protrusion portion 11c, the screw groove 11e is provided about the photographing optical axis O at an inner wall surface of the back side (the side of the back-side case portion 13), which adjoins to the positioning surface 11d and has a smaller inner diameter size than that of the positioning surface 11d as centering the photographing optical axis O. The screw groove 11e is capable of being screwed with the later-described screw groove 36 of the lens barrel 30. In the insertion opening 11b, the inward protrusion portion 11c is provided, and thereby an enlarged opening portion 11f having a relatively-large diameter size (an inner diameter size when viewed in the radial direction, which is relatively large on the basis of the direction of the photographing optical axis O) is formed at the front side (the object side) of the mounting wall portion 11, and a narrowed opening portion 11g having a smaller diameter size than that of the enlarged opening portion 11f is formed at the back side (the side of the back-side case portion 13) of the mounting wall portion 11. That is, regarding the insertion opening 11b, the inward protrusion portion 11c is provided, and thereby the stepped penetration opening having the two concentric circular shapes when viewed from the front side (the side of the object) is formed in the mounting wall portion 11. The insertion opening 11b is set so as to form a radial direction positioning portion described below on the mounting wall portion 11 by the positioning surface 11d. Further, the insertion opening 11b is set so as to form a photographing-optical-axis-direction positioning portion described below on the mounting wall portion 11 by a cooperation of the front side surface 11h of the inward protrusion portion 11c and the screw groove 11e. The front side surface 11h is the orthogonal surface which is orthogonal to the direction of the photographing optical axis O.

As shown in FIGs. 1 and 2, the back-side case portion 13 is in a box shape having one end to be opened and cooperates with the mounting wall portion 11 to form the case 12 housing the imagine optical system 20 and the electric equipment substrate portion 50 (the image pickup device 62). Since the size of the mounting wall portion 11 when viewed in the direction of the photographing optical axis O is limited by the positional relationship between the mounting wall portion 11 and the narrowed diameter portion 32 of the lens barrel 30 as described below, the back-side case portion 13 has a size (a depth size) capable of housing the imaging optical system 20 and the electric equipment substrate portion 50 bonded to the lens barrel 30 of the imaging optical system 20 at a back side of the back end surface 11a of the mounting wall portion 11. Two mounting projections 13b to attach the case 12 including the imaging apparatus 10 to a desired place are provided at a back end side of the back-side case portion 13. In the first embodiment, both of the mounting projections 13b are boss sections in which screw holes are provided (not shown), respectively. Further, an electrical wire 14 to supply electrical power to the electric equipment substrate portion 60 described below (an electronic component 53 described below) and transmit image data obtained on the later-described image pickup device 52 which is mounted on the electric equipment substrate portion 50, is provided on the back-side case portion 13. The electrical wire 14 is capable of being connected to the electric equipment substrate portion 50 with the sealing capability to outside. A configuration having the sealing capability is achieved by providing a connection hole (not shown) on the back-side case portion 13, inserting the electrical wire 14 thereto, and also filling a circumference of the connection hole with a waterproof adhesive, or forming the electrical wire 14 (a covering member thereof) integrally with the back-side case portion 13. Further, in a case where the back-side case portion 13 is not attached to the mounting wall portion 11, the electrical wire 14 is directly connected to the electric equipment substrate portion 50. The imagine optical system 20 is attached to the mounting wall portion 11 capable of being bonded to the back-side case portion 13.

The imagine optical system 20 has a configuration such that an optical element group 40 is retained in the lens barrel 30. The lens barrel 30 has a tubular shape to retain the optical element group 40 inside. As shown in FIGs. 4 to 6, regarding an external shape of the lens barrel 30, one end side of the lens barrel 30 as the front side (the object side) is an enlarged diameter portion 31 having a relatively-large diameter size (an outer diameter size in the radial direction, on the basis of the photographing optical axis O), and the other end side thereof as the back side is the narrowed diameter portion 32 having a smaller diameter size than that of the enlarged diameter portion 31. The enlarged diameter portion 31 is capable of being inserted into the enlarged opening portion 11f of the insertion opening 11b of the mounting wall portion 11, and has the outer diameter size which is not capable of being inserted into the narrowed opening portion 11g of the insertion opening 11b. Further, the narrowed diameter portion 32 has an outer diameter size capable of being inserted into the narrowed opening portion 11g of the insertion opening 11b of the mounting wall portion 11.

The imaging apparatus 10according to an embodiment of the present invention may further include, for example, as shown in FIG. 4, a retaining portion, for example, a flat surface portion 37 provided on the outer circumference surface of the lens barrel 30 and is configured to rotate the lens barrel 30 about the photographing optical axis O relative to the mounting wall portion 11 at an inner side of the mounting wall portion 11 in a state where the lens barrel 30 is inserted into the stepped penetration opening 11b of the mounting wall portion 11.
In the lens barrel 30, a screw groove 33 on an outer circumference surface of the enlarged diameter portion 31, the orthogonal surface 34 which is orthogonal to the direction of the photographing optical axis O and formed by a difference between the outer diameter sizes of the enlarged diameter portion 31 and the narrowed diameter portion 32, the positioning portion 35 provided on a position adjoining to the orthogonal surface 34 on the outer circumference surface of the narrowed diameter portion 32, the screw groove 36 as the lens-barrel side screw groove provided on a position adjoining to the positioning portion 36 on the outer circumference surface of the narrowed diameter portion 32, and a plurality of the flat surface portions 37 which are placed around the photographing optical axis O on the outer circumference surface of the narrowed diameter portion 32 are provided.

The screw groove 33 is capable of being screwed with a screw groove 22a provided on the anti-drop member 22 described below. The orthogonal surface 34 is in a positional relationship, in which the orthogonal surface 34 is capable of abutting on the front side surface 11h of the insertion opening 11b, when the enlarged diameter portion 31 of the lens barrel 30 is positioned in the enlarged opening portion 11f of the insertion opening 11b of the mounting wall portion 11.

The positioning portion 35 has a surface shape in which the positioning portion 35 is capable of internally contacting to the positioning surface 11d of the narrowed opening portion 11g (the inward protrusion portion 11c) when the narrowed diameter portion 32 of the lens barrel 30 is positioned in the narrowed opening portion 11g of the insertion opening 11b of the mounting wall portion 11. That is, it is possible for the positioning portion 35 to position the lens barrel 30 in the radial direction in the insertion opening 11b of the mounting wall portion 11 by cooperating with the positioning surface 11d. Therefore, the positioning portion 35 and the positioning surface 11d of the mounting portion 11 function as the radial-direction positioning portion to position the lens barrel 30 (the imaging optical system 20) relative to the mounting wall portion 11 in the radial direction. Especially, in the first embodiment, since a configuration is such that the positioning portion 35 and the positioning surface 11d abut each other on a curved surface extending in the direction of the photographing optical axis O centering the photographing optical axis O, it is possible for the radial-direction positioning portion to match a central axis line of the mounting wall portion 11 (the insertion opening 11b) with a central axis line of the lens barrel 30 (a retaining opening 38).

The screw groove 36 is capable of being screwed with the screw groove 11e of the inward protrusion portion 11c of the mounting wall portion 11. Therefore, the narrowed diameter portion 32 of the lens barrel 30 is positioned in the narrowed opening portion 11g of the insertion opening 11b of the mounting wall portion 11, so that the screw groove 36 is screwed to the screw groove 11e of the narrowed opening portion 11g (the inward protrusion portion 11c). Accordingly, it is possible for the lens barrel 30 to be attached to the mounting wall portion 11 where the lens barrel 30 is positioned in the radial direction by the above-mentioned radial-direction positioning portion. In this circumstance, in a case where the lens barrel 30 is rotated and moved to the back side (the other end side where the electric equipment substrate portion 50 is to be mounted) relative to the mounting wall portion 11 by actions of the screw groove 11e and the screw groove 36, the orthogonal surface 34 of the lens barrel 30 and the front side surface 11h of the insertion opening 11b of the mounting wall portion 11 are pressed to and contacted with each other, and thereby relative positions of the lens barrel 30 and the mounting wall portion 11 in the direction of the photographing optical axis O are determined, so that it is possible to fix the lens barrel 30 and the mounting wall portion 11 each other. Therefore, the orthogonal surface 34 of the lens barrel 30 and the front side surface 11h of the insertion opening 11b of the mounting wall portion 11 function as the photographing-optical-axis-direction positioning portion to position the lens barrel 30 (the imaging optical system 20) relative to the mounting wall portion 11 in the direction of the photographing optical axis O. Further, the screw groove 11e of the insertion opening 11b of the mounting wall portion 11 cooperates with the positioning surface 11d of the above-mentioned radial-direction positioning portion, so that the screw groove 11e and the positioning surface 11d function as the screw fixation section which allows the one end portion (the orthogonal surface 34 in this embodiment) of the lens barrel 30 to be pressed against the mounting wall portion 11 (the front side surface 11h in this embodiment) in the direction of the photographing optical axis O and fixes the lens barrel 30 to the mounting wall portion 11.

The plurality of the flat surface portions 37 are provided on the outer circumference surface of the narrowed diameter portion 32 adjoining the screw groove 36 in the direction of the photographing optical axis O and extended in a size having a predetermined length in the direction of the photographing optical axis O with predetermined intervalis between the plurality of the flat surface portions 37 and the back end (the other end) portions of the lens barrel 80, respectively. The size having the predetermined length is set in terms of easily sandwiching and holding the lens barrel 30 in order to rotate the lens barrel 30 when the lens barrel 30 is fixed to the mounting wall portion 11 as mentioned above. Therefore, the flat surface portion 37 functions as the retaining portion capable of a contact for sandwiching and holding the lens barrel 30 in a state where the lens barrel 30 is inserted from a side of an inner edge projection portion 39 (the other end side) into the insertion opening 11b of the mounting wall portion 11, and the screw groove 36 of the narrowed diameter portion 32 of the lens barrel 30 is screwed to the screw groove 11e of the narrowed opening portion 11g (the inward protrusion portion 11c) of the insertion opening 11b (refer to FIG. 13). Further, the predetermined interval between the flat surface portion 37 and the back end portion is to be capable of ensuring a size of a length to be made possible to bond a lens-barrel side bonding portion 54a (refer to FIG. 10) of the intermediate retaining member 54 described below to the lens barrel 30. Therefore, in the narrowed diameter portion 32, the outer circumference surface positioned in the back end side relative to each of the flat surface portions 37 in the direction of the photographing optical axis O becomes a bond surface B to be bonded with the lens-barrel side bonding portion 54a of the intermediate retaining member 54 described below. In the first embodiment, the flat surface portions 37 are provided at four parts equally spaced when viewed in a circumferential direction of the narrowed diameter portion 32, respectively, and are arranged in pairs in the radial direction in order to be easily sandwiched and held in the radial direction (the orthogonal direction to the photographing optical axis O).

In the lens barrel 30, the retaining opening 38 penetrating a center position of the lens barrel 30 along the direction of the photographing optical axis O is provided in order to retain the optical element group 40. The retaining opening 38 has a large inner-diameter portion 38a capable of fitting of the lens 41 as the optical element group 40 described below in the front side (the object side), a middle inner-diameter portion 38b adjoining thereto and having a smaller inner-diameter size than that of the large inner-diameter portion 38a, and a small inner-diameter portion 38c adjoining thereto and having a smaller inner-diameter size than that of the middle inner-diameter portion 38b. In the large inner-diameter portion 38a, an orthogonal surface 38d which is orthogonal to the direction of the photographing optical axis O is provided at a side of the middle inner-diameter portion 38b, and an annular projection portion 38e having an annular shape and the inner-diameter size equal to that of the middle inner-diameter portion 38b is provided on the orthogonal surface 38d in order to support a back surface of the lens 41 described below. The inner edge projection portion 39 to prevent a lens 47, which is fit, as the optical element group 40 described below from dropping is provided at a back side of the small inner-diameter portion 38c (a side of the image pickup device 62 described below), that is, at the back end (the other end) of the lens barrel 30. The optical element group 40 is housed in the retaining opening 38 of the lens barrel 30.

The optical element group 40 has the at least one optical element and is configured to form an image at an arbitrary position in order to obtain the image, and composed appropriately in accordance with an optical capability required in the imaging apparatus 10 (the imaging optical system 20). In the first embodiment, the optical element group 40 has, as shown in FIGs. 7 and 8, the lens 41, a lens 42, a lens 43, an aperture stop 44, a lens 45, a lens 46, and the lens 47 arranged in sequence from the object side. The lens 41 has an outer diameter size capable of being fit into the large inner-diameter portion 38a of the retaining opening 38 of the lens barrel 30. The lens 42, the lens 43, and the aperture stop 44 have outer diameter sizes capable of being fit into the middle inner-diameter portion 38b of the retaining opening 38 of the lens barrel 30, respectively. The lens 46 and the lens 47 have outer diameter sizes capable of being fit into the small innor-diameter portion 38c of the retaining opening 38 of the lens barrel 30, respectively. The optical element group 40 is inserted from an opening at a side of the large inner-diameter portion 38a into the retaining opening 38 of the lens barrel 30 in sequence of the lens 47, the lens 46, the lens 45, the aperture stop 44, the lens 43, the lens 42, and the lens 41. In this circumstance, in the first embodiment, when the lens 41 is inserted into the retaining opening 38 after the lens 42, an O-ring 21 is at first arranged so as to surround the annular projection portion 38e on the orthogonal surface 38d of the large inner-diameter portion 38a of the retaining opening 38, and the lens 41 is inserted into the retaining opening 38 such that the back surface of the lens 41 faces the orthogonal surface 38d in a state where the back surface of the lens 41 has contact with the O-ring 21 and the annular projection portion 38e.

The optical element group 40 inserted into the retaining opening 38 is prevented from dropping from the opening of the side of the large inner-diameter portion 38a by means of the anti-drop member 22. The anti-drop member 22 has a tubular shape in a size capable of surrounding the outer circumference surface of the enlarged diameter portion 31 of the lens barrel 30. A front end portion (an end portion of the object side) of the anti-drop member 22 has a diameter size capable of abutting on a circumferential edge portion (an outer position of an available area) of a front surface of the lens 41 externally (from the front side). The screw groove 22a capable of being screwed with the screw groove 33 provided on the enlarged diameter portion 31 of the lens barrel 30 is provided at a back end side on an inner circumference surface of the anti-drop member 22. In a state where the optical element group 40 is inserted into the retaining opening 38 as appropriate, the screw groove 22a is screwed with the screw groove 33 so as to cover the enlarged diameter portion 31, and thereby the anti-drop member 22 presses the lens 41 toward the back side (the side of the image pickup device 62 described below) of the lens barrel 30. Therefore, the optical element group 40 is pressed toward the side of the inner edge projection portion 39 in the retaining opening 38 of the lens barrel 30, the lens 47 is pressed against the inner edge projection portion 39, and thereby the optical element group 40 is positioned in the direction of the photographing optical axis 0 in the retaining opening 38. Accordingly, the optical element group 40 becomes aligned in an appropriate position on the photographing optical axis O in the lens barrel 30, so that the imaging optical system 20 having a desired optical capability is assembled. In this circumstance, the O-ring 21 arranged between the back surface of the lens 41 and the orthogonal surface 38d of the large inner-diameter portion 38a of the retaining opening 38 is appropriately compressed, that is, is pressed to and contacted with the back surface of the lens 41 as well as the orthogonal surface 38d. Therefore, in the imaging optical system 20, the appropriately-compressed O-ring 21 prevents water, dust, and the like from invading from a circumference of the lens 41 to inside (the middle inner-diameter portion 38b and the small inner-diameter portion 38c of the retaining opening 38) of the lens barrel 30, and the imaging optical system 20 has a sufficient sealing capability. In this manner, in the imagine optical system 20, the optical element group 40 (the lens 41 as the objective lens thereof) is retained to be sealed by the lens barrel 30, and the imaging optical system 20 has the desired optical capability. In addition, in the first embodiment, a rotationally-symmetric axis (a central position in the image obtained on the image pickup device 52) for each of the lenses 41 to 47 including the aperture stop 44, which is a central axis position of the optical element group 40 (the lens barrel 30), is the photographing optical axis O of the imaging optical system 20. The electric equipment substrate portion 50 is arranged at a position of the image to be formed by the optical element group 40 of the imaging optical system 20.

The electric equipment substrate portion 50, as shown in FIG. 9, has a configuration such that the substrate 51 on which the image pickup device 62 and the electronic component 53 are mounted. The image pickup device 52 is constituted of a solid-state image sensing device such as a CCD image sensor, a CMOS image sensor, or the like, and converts the object image formed on a light receiving surface 52a through the imaging optical system 20 (the optical element group 40) into an electrical signal (the image data) to output the converted electrical signal. The electronic component 53 is used for controlling an operation in the image pickup device 52, producing a digital image corresponding to the object image in accordance with the electrical signal output from the image pickup device 52, and so on.

The bond structure may include an indirect bond structure having the intermediate retaining member 54having one end which forms a lens-barrel side bond surface to be bonded to the lens barrel 30 and the other end which forms a light-receiving side bond surface to be bonded to the image pickup device section, a lens-barrel side bond layer, for example, a bond layer C4provided on the lens-barrel side bond surface, and a light-receiving side bond layer, for example, a bond layer C5 provided on the light-receiving side bond surface.
The electric equipment substrate portion 50 is bonded to the lens barrel 30 by the bond structure (refer to FIG. 2 and so on). In the first embodiment, a part of the bond structure is formed by an indirect bond method using the intermediate retaining member 64 (refer FiGs. 2, 14, 15, and so on). The intermediate retaining member 54 constitutes an indirect bond structure to bond the image pickup device 52 or the substrate 51 on which the image pickup device 62 is mounted to the lens barrel 30 by use of an adhesive, while maintaining a state where a position of the image pickup device 52 (the light receiving surface 52a thereof relative to the optical element group 40 is optically positioned (a positional relationship) so as to set the position of the image to be formed by the imaging optical system 20 (the optical element group 40) to be on the light receiving surface 52a of the image pickup device 52. As shown in FIG. 10, an elongated rectangular parallelepiped member is bended, so that the intermediate retaining member 54 has an L-shape for its entirety and has the lens-barrel side bonding portion 64a and a substrate side bonding portion 54b. When the indirect bond method is performed, in the intermediate retaining member 54, the lens-barrel side bonding portion 54a forms the lens-barrel side bond surface to be bonded to the bond surface B (the outer circumference surface) of the narrowed diameter portion 32 of the lens barrel 30, and the substrate side bonding portion 54b forms the light-receiving side bond surface to be bonded to a surface 51a (a surface of the side where the image pickup device 52 is mounted) of the substrate 51 of the electric equipment substrate portion 50.

Next, the indirect bond method will be explained. As shown in FIGs. 11A to 11D, in a case where two members t1, t2 separated from each other are bonded to each other by the adhesive in a state where both of the two members t1, t2 are relatively positioned, the adhesive may be, as shown in FIG. 11A, applied (injected) to form a bond layer C1 (hereinafter, referred to as a filling bond method) so as to fill a gap between the member t1 and the member t2, while the both of the two members t1, t2 are positioned and fixed. However, in a case where the two members are bonded in this manner, when a relative positioning fixation is released, the bond layer C1, as shown in FIG. 11B, shrinks when hardening (hereinafter, referred to as hardening-shrinking), and thereby the member t1 and the member t2 become out of alignment from a state where the two members are relatively positioned, particularly in this embodiment, become greatly out of alignment in a direction in which the gap of each other shrinks (refer to an arrow A1). Regarding this, in a case where the member t1 is the lens barrel 30 and the member t2 is the substrate 51. (the image pickup device 62) in the first embodiment, if the optical element group 40 (the lens barrel 30 retaining the optical element group 40) and the image pickup device 52 (the substrate 51 where the image pickup device 52 is mounted) are bonded to each other by the adhesive filled after being relatively positioned, the relative positional relationship between the optical element group 40 and the image pickup device 52, in particular, the interval therebetween in the direction along the photographing optical axis O will be changed, so that the optical capability is lowered in the imaging optical system 20, that is, the imaging apparatus 10. Therefore, in the imaging apparatus 10 in the first embodiment, the indirect bond method using the intermediate retaining member 54 is adopted to bond the lens barrel 30 and the electric equipment substrate portion 50 (the substrate 51) to each other in order to prevent the relative positional relationship between the optical element group 40 and the image pickup device 52 from being changed.

In the indirect bond method, when the above-mentioned members t1 and t2 are used for an example, as shown in FIG. 11C, the intermediate retaining member 54 to be used is set in a size in accordance with the positional relationship between the positioned members t1, t2. The size in accordance with the positional relationship between the members t1, t2 is a size in which the lens-barrel side bonding portion 54a is capable of abutting on a side surface t1a of the member t1 while the substrate side bonding portion 54b abuts on a upper surface t2a of the member t2 in a state where both of the members t1, t2 are positioned and fixed. In the indirect bond method, a bond layer C2 formed by the applied adhesive is disposed between the lens-barrel side bonding portion 54a and the member t1 (the side surface t1a) to abut each other, and also a bond layer C3 formed by the applied adhesive is disposed between the substrate side bonding portion 54b and the member t2 (the upper surface t2a) to abut each other. Accordingly, the intermediate retaining member 54 is arranged relative to the positioned and fixed members tri, t2 so as to be a bridge between the members t1, t2. In a state where the members t1, t2 are positioned and fixed, and the intermediate retaining member 54 is attached to the member t1 (the side surface t1a) and the member t2 (the upper surface t2a) by both of the bond layers C2, C3, respectively, and not retained (bound) by any other, the bond layer C2 and the bond layer C3 harden, and thereby the members t1 and t2 are bonded and fixed via the intermediate retaining member 54. In the indirect bond method, even though the positioning fixation of the members t1, t2 is released after the bond layer C2 and the bond layer C3 harden, the positional relationship between the members t1, t2 is, as shown in FIG. 11D, barely changed. Regarding this, the following may be thought.

Since the size of the intermediate retaining member 54 is set in accordance with the positional relationship between the members t1, t2, the lens-barrel side bonding portion 54a and the member t1 (the side surface t1a) are capable of abutting each other, and also the substrate side bonding portion 54b and the member t2 (the upper surface t2a) are capable of abutting each other, regardless of the interval (the positional relationship) between the member t1 and the member t2. Therefore, the bond layer C2 and the bond layer C3 can be made to be extremely thin. Accordingly, since it is possible to minimize quantity of the hardening-shrinking in the bond layers C2, C3, it is possible to minimize an action in which the hardening-shrinking in the bond layers C2, C3 affects the positional relationship between the member t1 and the member t2. Further, since the intermediate retaining member 54 is attached to the positioned and fixed members t1, t2 by the bond layers C2, C3, respectively, and not bound by the any other when the bond layers C2, C3 harden, the intermediate retaining member 54 moves in an approaching direction (refer to an arrow A2) relative to the members t1, t2 when the bond layers C2 and C3 harden and shrink. Thus, the intermediate retaining member 54 is displaced in the approaching direction (refer to the arrow A2) relative to both of the member t1, t2, and thereby it is possible to absorb an action of the hardening-shrinking in the bond layers C2 and C3. Therefore, it is possible to minimize the action in which the hardening-shrinking in both of the bond layers C2, C3 affects the positional relationship between the member t1 and the member t2.

In the first embodiment, the electric equipment substrate portion 50 is bonded to the lens barrel 30 by the indirect bond method using four intermediate retaining members 54 (refer to FIGs. 2, 14, 15, and so on). The intermediate retaining members 54 are provided at four parts equally spaced when viewed in the circumferential direction of the narrowed diameter portion 32 (refer to FIG. 14), respectively. In the first embodiment, since an ultraviolet cure adhesive is adopted as an adhesive in the indirect bond method as described below, each of the intermediate retaining members 54 is made of at least an ultraviolet ray penetrating material.

Before a positioning fixation of the electric equipment substrate portion 50 (the image pickup device 52 mounted on the substrate 51 thereof) relative to the lens barrel 30, as shown in FIG. 12, the imaging optical system 20 assembled as mentioned above (refer to FIGs. 7 and 8) and the mounting wall portion 11 are fixed to each other in the imaging apparatus 10. In this fixation, an O-ring 23 as an example of the sealing member is arranged on the front side surface 11h of the mounting wall portion 11, the lens barrel 30 is inserted into the insertion opening 11b from a side of the enlarged opening portion 11f of the mounting wall portion 11 (refer to an arrow A3) so as to allow the orthogonal surface 34 of the lens barrel 30 to contact with the O-ring 23 when the side of the inner edge projection portion 39 (the other end side) of the lens barrel 30 is a leading end in an insertion direction, the narrowed diameter portion 32 thereof is positioned in the narrowed opening portion 11g of the insertion opening 11b of the mounting wall portion 11, and the screw groove 36 is screwed with the screw groove 11e of the narrowed opening portion 11g (the inward protrusion portion 11c). The flat surface portions 37 of the narrowed diameter portion 32 of the lens barrel 30 inserted and positioned at an inner side of the mounting wall portion 11 are sandwiched and held in the radial direction, the lens barrel 30 is rotated about the photographing optical axis O relative to the mounting wall portion 11, the front side surface 11h of the mounting wall portion 11 and the orthogonal surface 34 of the lens barrel 30 are pressed to and contacted with each other, and thereby, a relative position of the lens barrel 30 and the mounting wall portion 11 in the direction of the photographing optical axis O is determined while the O-ring 23 disposed between the front side surface 11h and the orthogonal surface 34 is appropriately compressed, so that the lens barrel 30 and the mounting wall portion 11 can be fixed to each other in a positioned state in the radial direction by the radial-direction positioning portion mentioned above. In this circumstance, since the electric equipment substrate portion 60 (the image pickup device 52) is not provided on the back end portion (the other end portion) of the lens barrel 30, an easy rotation operation (fixation operation) of the lens barrel 30 relative to the mounting wall portion 11 is achieved. In particular, since a configuration in the first embodiment is such that a first space P1 (refer to FIG. 13) is provided as described below, any other composition members do not exist (a second space is formed) at an external position of the narrowed diameter portion 32 of the lens barrel 30 when the lens barrel 30 is tightened and fixed to the mounting wall portion 11. Therefore, the above-mentioned rotation operation (fixation operation) is further easily achieved. In addition, a rotation of the lens barrel 30 by the flat surface portions 37 being sandwiched and held may be performed either by an operator's hand or by a tool that the operator uses. Further, it may be performed by a machine. Accordingly, an invasion by the water, the dust, and the like into a gap between the mounting wall portion 11 and the lens barrel 30 (the imaging optical system 20) from a side of the object-side surface S of the mounting wall portion 11 (a side where the lens 41 as the objective lens is exposed) is avoided, so that the lens barrel 30 and the mounting wall portion 11 are fixed to each other (refer to FIG. 13) with the sufficient sealing capability. The positioning fixation of the electric equipment substrate portion 50 (the image pickup device 62 mounted on the substrate 51 thereof relative to the lene barrel 30, which is fixed to be sealed to the mounting wall portion 11, will be explained hereinafter.

Here, as shown in FIG. 13, the mounting wall portion 11 has a configuration such that the intermediate retaining member 54 is capable of being attached to the bond surface B of the narrowed diameter portion 32 of the lens barrel 30 of the imaging optical system 20 in a state where the lens barrel 30 (the imaging optical system 20) is fixed. That is to say, the mounting wall portion 11 has a size in which the mounting wall portion 11 does not reach an area of the back end side (the bond surface B) relative to each of the flat surface portions 37 on the outer circumference surface of the narrowed diameter portion 32 of the lens barrel 30 of the imaging optical system 20 in the direction of the photographing optical axis O in a state where the imaging optical system 20 is inserted into the insertion opening 11b, that is, a size the mounting wall portion 11 does not interfere with a surface which is across the bond surface B and orthogonal to the direction of the photographing optical axis O. Therefore, in the imaging apparatus 10, in a fixation state of the mounting wall portion 11 and the lens barrel 30, the any other composition members do not exist at the external position when the bond surface B of the narrowed diameter portion 32 is viewed in the radial direction. Accordingly, in the imaging apparatus 10 in the first embodiment, in the fixation state of the mounting wall portion 11 and the lens barrel 30, the first space P1 for bonding the image pickup device 52 or the substrate 51 to the lens barrel 30 by adhesion (forming the bond structure) is provided at the external position when the bond surface B of the narrowed diameter portion 32 is viewed in the radial direction. In addition, since the first space P1 is a space for an operation of the positioning fixation of the imaging apparatus 10, it is unnecessary to be ensured after the positioning fixation is completed.

At first, for positioning the electric equipment substrate portion 50 relative to the lens barrel 30, the mounting wall portion 11, on which the lens barrel 30 is fixed to be sealed, is retained to be fixed by a case retaining portion 61 in an adjusting device 60. The electric equipment substrate portion 50 (the substrate 51 thereof) is arranged such that the image pickup device 52 (the light receiving surface 52a thereof is positioned at the back end side (the other end side) of the lens barrel 30 in a retained state by the case retaining portion 61 and on the photographing optical axis O, and the substrate 51 is retained by an image-pickup-device retaining portion 62 in the adjusting device 60. The image-pickup-device retaining portion 62 is capable of retaining the substrate 51 of the electric equipment substrate portion 50 in an arbitrary rotation position by rotating about the photographing optical axis O relative to the lens barrel 30 (the optical element group 40) fixed to the mounting wall portion 11 retained by the case retaining portion 61. Further, the image-pickup-device retaining portion 62 is capable of retaining the substrate 51 of the electric equipment substrate portion 50 so that it is made possible to adjust a tilt of the image pickup device 52 (the light receiving surface 52a thereof) relative to an axis line (the photographing optical axis O) of the lens barrel 30 retained by the case retaining portion 61 at least via the mounting wall portion 11 as well as a position (interval) in the direction of the photographing optical axis O of the image pickup device 62 (the light receiving surface 52a) relative to the lens barrel 30.

As mentioned above, the substrate 51 of the electric equipment substrate portion 50 is retained by the image-pickup-device retaining portion 62 relative to the mounting wall portion 11 fixed and retained by the case retaining portion 61 so that up, down, right and left directions of the mounting wall portion 11 are coincident with those in the image obtained on the image pickup device 52, respectively, and the photographing optical axis O of the imaging optical system 20 (the optical element group 40) is positioned at a center in the image obtained on the image pickup device 52.

The electrical power is supplied to the electric equipment substrate portion 50 (the electronic component 53 thereof) retained by the image-pickup-device retaining portion 62 (the adjusting device 60), and also the image from the electric equipment substrate portion 60 (the image pickup device 52 thereof becomes in a state capable of being displayed on a monitor 70. Further, the object (not shown) is arranged at a position of a predetermined interval away from the imaging apparatus 10 on the photographing optical axis O of the imaging apparatus 10 to be formed in the imaging optical system 20, and also the image in accordance with the electrical signal (the image data) from the image pickup device 52 receiving light of the object image is displayed on the monitor 70.

In the adjusting device 60, as mentioned above, it is possible to adjust, relative to the lens barrel 30, the tilt of the image pickup device 52 (the light receiving surface 52a thereof) relative to the axis line (the photographing optical axis O) of the lens barrel 30 as well as the position (interval) in the direction of the photographing optical axis O of the image pickup device 52 (the light receiving surface 52a) relative to the lens barrel 30 by actions of the case retaining portion 61 and the image-pickup-device retaining portion 62. Therefore, it is possible to move the image pickup device 52 (the light receiving surface 52a) in the direction of the photographing optical axis O in a state where the light receiving surface 52a is orthogonal to the photographing optical axis O while maintaining a state where the up, down, right and left directions in the obtained image are coincident with those of the mounting wall portion 11, respectively. Therefore, it is possible to perform a so-called focus adjustment in which the position of the image to be formed by the imaging optical system 20 is to be on the light receiving surface 52a.

In the focus adjustment, the tilt and the position of the image pickup device 52 via the image-pickup-device retaining portion 62 are arbitrarily changed relative to the lens barrel 30 of the mounting wall portion 11 retained by the case retaining portion 61, and it is judged whether or not the image (the object image) displayed on the monitor 70 is in an appropriate state. The focus adjustment may be performed either by the operator visually checking the image or by an automatic image analysis (an adjusting device 60 mounting a function thereof.

After a completion of the focus adjustment, in a state where a fixation retainment by the case retaining portion 61 and the image-pickup-device retaining portion 62 is maintained, that is, the relative positional relationship between the lens barrel 30 and the substrate 51 is maintained, each of the intermediate retaining members 54, in which the adhesive is applied to the lens-barrel side bonding portion 54a to form the bond layer C4 as the lens-barrel side bond layer as well as to the substrate side bonding portion 54b to form the bond layer C5 as the light-receiving side bond layer, is arranged so as to be the bridge between the lens barrel 30 and the substrate 51 (the electric equipment substrate portion 50) (refer to the intermediate retaining member 54 shown by a long dashed double-short dashed line, for example, in FIG. 13). In the first embodiment, the lens-barrel side bonding portions 64a of the intermediate retaining members 54 are attached to the bond surfaces B on the outer circumference surface of the narrowed diameter portion 32 of the lens barrel 30, respectively. Further, the substrate side bonding portions 54b of the intermediate retaining members 54 are attached to the surface 51a of the substrate 51 so as to surround the image pickup device 52, respectively (refer to FIGs. 14, 15, and so on). In the first embodiment, the ultraviolet cure adhesive is adopted in order to form the bond layer C4 and the bond layer C6. Each of the intermediate retaining members 54 is attached to the lens barrel 30 and the substrate 51, which are optically positioned relative to each other, so as to be the bridge between them by the bond layer C4 and the bond layer C5 (refer to the intermediate retaining member 54 shown by the long dashed double-short dashed line).

In a state where the fixed retainment of the mounting wall portion 11 in which the lens barrel 30 is fixed by the case retaining portion 61 is maintained, as well as where the fixed retainment of the substrate 51 (the electric equipment substrate portion 50) in a state of being optically positioned relative to the lens barrel 30 (the optical element group 40) by the image-pickup-device retaining portion 62 is maintained, and further in a state where each intermediate retaining member 54 is attached to the lens barrel 30 and the substrate 51 without being bound by the any other, the above-mentioned indirect bond method to harden the bond layer C4 and the bond layer C5 by an irradiation of ultraviolet rays by use of the first space P1 is performed. Then, as shown in FIGs. 14 and 15, even after the fixation retainment by the case retaining portion 61 and the image-pickup device retaining portion 62 is released, the lens barrel 30 and the substrate 51 are bonded to each other via the intermediate retaining members 54 by the adhesion while an optically-set positional relationship is maintained. Therefore, each of the intermediate retaining members 54 forms the indirect bond structure capable of bonding the lens barrel 30 and the substrate 51 (the image pickup device 52) by the adhesion, while the relative positional relationship therebetween is maintained, by a cooperation with the bond layer C4 and the bond layer C5. In addition, the meaning of "maintaining the positional relationship" shows at least maintaining a state where an optically-appropriate image is capable of being obtained on the image pickup device 52 (the light receiving surface 52a thereof), and therefore, movement in a strict meaning may be allowed.

The bond structure may include a filling bond structure having a filling bond layer, that is, a bond layer C6 to fill a gap between the other end portion of the lens barrel 30 and the image pickup device section in a state where the image pickup device 52 and the at least one optical element are optically positioned or aligned, and the filling bond layer C6 may be formed by an adhesive having a light blocking effect.
In the first embodiment, the filling bond method is performed after the indirect bond method using each of the intermediate retaining members 54 mentioned above. In the filling bond method, as shown in FIGs. 16, 17, and 18, the adhesive is applied (injected) to form the bond layer C6 as the filling bond layer C6 so as to fill a gap between the lens barrel 30 and the substrate 51 bonded to each other via the intermediate retaining members 64. In the first embodiment, a heat cure adhesive having the light blocking effect is adopted in order to form the bond layer C6. The bond layer C6 is provided in an annular shape along an outer edge portion of the other end of the lens barrel 30 (the external position of the inner edge projection portion 39) and is to surround the image pickup device 52 so as not to interfere at least in an available area (an effective light-receiving area) of the light receiving surface 52a of the image pickup device 62 on the surface 51a of the substrate 51. Therefore, in the first embodiment, the adhesive is applied (injected) to an internal side (the side of the image pickup device 52) of each of the intermediate retaining members 54 by use of the first space P1 (refer to FIG. 13) so as to fill the gap surrounded by the internal side of each of the intermediate retaining members 54, the lens barrel 30 (the back end thereon, and the substrate 51 (the surface 51a), so that the bond layer C6 is formed (refer to FIG. 17). The so-called filling bond method, in which the imaging apparatus 10 in a state where the annular bond layer C6 is formed between the lens barrel 30 and the substrate 51, which are bonded to each other by the indirect bond structure, is arbitrarily heated by an oven (not shown) by use of the first space P1 (refer to FIG. 13) to harden the bond layer C6, is performed. In this circumstance, although the bond layer C6 easily shrinks when hardening, since the lens barrel 80 and the substrate 51 are bonded to each other by the above-mentioned indirect bond structure using the intermediate retaining members 54 in a positioned or aligned state relative to each other, the positional relationship between the lens barrel 30 and the substrate 51 does not change, Accordingly, the lens barrel 30 and the substrate 51 become bonded to each other by the bond layer C6 with the light blocking effect and the annular shape so as to surround the image pickup device 52 while the relative positional relationship by the indirect bond structure is maintained. Therefore, the annular bond layer C6 forms the filling bond structure which bonds the lens barrel 30 and the substrate 51 bonded to each other in a relatively positioned state by the indirect bond structure by filling the gap therebetween in order to increase in strength to bond them. Further, the filling bond structure and the indirect bond structure constitute the bond structure which bonds the electric equipment substrate portion 50 (the substrate 51) and the lens barrel 30.

Thus, in a state where the electric equipment substrate portion 50 (the image pickup device 52 mounted on the substrate 51 thereof is positioned relative to the lens barrel 30 fixed to the mounting wall portion 11, the lens barrel 30 and the electric equipment substrate portion 60 (the substrate 51 thereof are fixed to each other, and thereby the imaging apparatus 10 is formed. In the imaging apparatus 10, the invasion by the water, the dust, and the like in the gap between the mounting wall portion 11 and the lens barrel 30 (the imaging optical system 20) from the side of the object-side surface S (the side where the lens 41 as the objective lens is exposed) of the mounting wall portion 11 is avoided by the 0-ring 23, so that the imaging apparatus 10 has the sufficient sealing capability as well as the appropriate optical capability.

In the first embodiment, as shown in FIGs. 1 and 2, the back-side case portion 13 is bonded to the mounting wall portion 11 to be sealed, and thereby the imaging apparatus 10 positioned and fixed in this manner can obtain by means of the case 12 the waterproof function and the dustproof function for the imaging optical system 20 and the electric equipment substrate portion 50 from the outside at the inner side of the mounting wall portion 11. Therefore, the imaging apparatus 10 can be attached to the desired position via the mounting projections 13b of the back-side case portion 13. Further, it is possible that the imaging apparatus 10 has the high optical capability, even though an entirety thereof is in a small configuration, and the sealing capability in all directions. Accordingly, the imaging apparatus 10, in which the back-side case portion 13 is bonded to the mounting wall portion 11 to form the surrounding case 12, is suitable for the in vehicle camera, for example.

Thus, in the imaging apparatus 10 according to an embodiment of the present invention, in a state where the up, down, right and left directions in the obtained image are coincident with those of the mounting wall portion 11, respectively, and also the focus adjustment relative to the imaging optical system 20 is performed, it is possible that the lens barrel 30 fixed to the mounting wall portion 11 and the substrate 51, that is, the image pickup device 52 are bonded to each other by the bond structure. Therefore, since a shape, in which the up, down, right and left directions can be identified according to its external shape, can be adopted for the mounting wall portion 11, degree of freedom for designing the mounting wall portion 11, that is, the case 12 can be dramatically improved.

Further, in the imaging apparatus 10 according to an embodiment of the present invention, the narrowed diameter portion 32 of the lens barrel 30 is inserted into the insertion opening 11b of the mounting wall portion 11, and the screw groove 36 of the narrowed diameter portion 32 is screwed with the screw groove 11e of the narrowed opening portion 11g, and thereby the mounting wall portion 11 and the lens barrel 30 can be fixed to be sealed, before the electric equipment substrate portion 60 (the substrate 51) and the lens barrel 30 are bonded to each other by the bond structure. Therefore, since it is unnecessary to cut out a portion of the substrate on which the image pickup device is mounted, in order that it becomes possible for a fixing instrument to be inserted in the direction of the photographing optical axis O as the conventional technology, it can greatly contribute to downsizing of the imaging apparatus 10.

Further, in the imaging apparatus 10 according to an embodiment of the present invention, since the focus adjustment can be performed while the up, down, right and left directions of the mounting wall portion 11 are coincident with those in the obtained image, respectively, in a state where the lens barrel 30 (the imaging optical system 20) is fixed to the mounting wall portion 11, influence of tolerance in each member of the optical element group 40 can be eliminated, and the appropriate optical capability can be obtained.

In the imaging apparatus 10 according to an embodiment of the present invention, in a state where the lens barrel 30 (the imaging optical system 20) is fixed to the mounting wall portion 11, the positioning surface 11d of the narrowed opening portion 11g of the insertion opening 11b of the mounting wall portion 11 and the positioning portion 35 of the narrowed diameter portion 32 of the lens barrel 30 abut each other, and thereby the lens barrel 30 is positioned in the radial direction in the insertion opening 11b of the mounting wall portion 11, and also the central axis line of the mounting wall portion 11 (the insertion opening 11b) and the central axis line of the lens barrel 30 (the retaining opening 38) are matched. Therefore, the image pickup device 52 (the light receiving surface 52a thereof) is optically positioned relative to the optical element group 40 appropriately retained in the lens barrel 30, and thereby further appropriate optical capability can be obtained.

In the imaging apparatus 10 according to an embodiment of the present invention, since the electric equipment substrate portion 50 (the substrate 51) is bonded to the lens barrel 30 (the imaging optical system 20) fixed to the mounting wall portion 11 by the bond structure, the lens barrel 30 and the electric equipment substrate portion 50 (the substrate 51) can be bonded to each other by the bond structure in a state where the image pickup device 52 (the light receiving surface 52a thereof is optically positioned relative to the lens barrel 30 (the optical element group 40) while considering the external shape of the mounting wall portion 11. Therefore, the appropriate optical capability can be obtained.

In the imaging apparatus 10 according to an embodiment of the present invention, since the indirect bond method using the intermediate retaining member 54 is adopted in the bond structure which bonds the lens barrel 30 (the imaging optical system 20) fixed to the mounting wall portion 11 and the electric equipment substrate portion 50 (the substrate 51), the lens barrel 30 and the substrate 51 can be bonded to each other by the adhesion, while the optically-set positional relationship is maintained, in a simple configuration. Therefore, further appropriate optical capability can be obtained.

In the imaging apparatus 10 according to an embodiment of the present invention, in the indirect bond method for bonding the lens barrel 30 (the imaging optical system 20) to the electric equipment substrate portion 50 (the substrate 51), the four intermediate retaining members 64, when a surface orthogonal to the photographing optical axis O is viewed, are arranged respectively in four directions, of which two pairs each including two directions opposite to each other are orthogonal to each other, centering the photographing optical axis O. Therefore, even if strength to move the substrate 51 in the radial direction acts relative to the lens barrel 30 due to shrinking, when the bond layer C4 and the bond layer C5 harden, in each of the intermediate retaining members 54, the strength can be mutually cancelled by an arrangement relationship between the four intermediate retaining members 54. Therefore, it can be further reliably avoided that the positional relationship between the lens barrel 30 and the substrate 51 changes in the indirect bond method.

In the imaging apparatus 10 according to an embodiment of the present invention, since the filling bond method for filling the gap between the lens barrel 30 and the substrate 51 bonded to each other in a relatively positioned state by the indirect bond structure with the bond layer C6, is adopted in the bond structure which bonds the lens barrel 30 (the imaging optical system 20) fixed to the mounting wall portion 11 and the electric equipment substrate portion 50 (the substrate 51), the lens barrel 30 and the substrate 51 can be further strongly bonded to each other by the adhesion, while the optically-set positional relationship is maintained, in the simple configuration. Therefore, further appropriate optical capability can be obtained.

In the imaging apparatus 10 according to an embodiment of the present invention, in the indirect bond structure, since the L-shaped intermediate retaining member 54, in which the lens-barrel side bonding portion 54a is attached to the bond surface B on the outer circumference surface of the narrowed diameter portion 32 of the lens barrel 30, and also the substrate side bonding portion 54b is attached to the surface 51a of the substrate 51, is the bridge between the lens barrel 30 and the substrate 51, the lens barrel 30 and the substrate 51 can be further strongly bonded to each other. Therefore, even in a case where the strength to bond them in the bond layer C6 weakens due to influence of temperature change, and so on, the positional relationship between the lens barrel 30 and the substrate 51 can be maintained. Therefore, a stable image characteristic can be obtained even under environment of severe temperature change.

In the imaging apparatus 10 according to an embodiment of the present invention, since the bond layer C4 and the bond layer C5 in the bond structure are formed by the indirect bond structure using the intermediate retaining member 54 having the size in accordance with the optically-positional relationship between the lens barrel 30 and the substrate 51, the bond layer C4 and the bond layer C5 can be extremely thin. Therefore, deformation amount due to the influence of temperature change, and so on can be reduced, and the stable image characteristic can be obtained even under the environment of severe temperature change.

In the imaging apparatus 10 according to an embodiment of the present invention, since the gap between the lens barrel 30 and the substrate 51 is filled by the bond layer C6 having the light blocking effect, an invasion by foreign substances onto the light receiving surface 52a of the image pickup device 52 from the outside of the lens barrel 30 can be avoided, and also light from the outside of the lens barrel 30 can be reliably prevented from entering the light receiving surface 52a of the image pickup device 62. Therefore, a further clear image can be obtained.

In the imaging apparatus 10 according to an embodiment of the present invention, the radial-direction positioning portion is formed by the positioning surface 11d of the narrowed opening portion 11g of the insertion opening 11b of the mounting wall portion 11 and the the positioning portion 35 of the narrowed diameter portion 32 of the lens barrel 30. In addition, the screw groove 11e of the narrowed opening portion 11g of the mounting wall portion 11 as a fixation section to fix the mounting wall portion 11 and the lens barrel 30 to each other and the screw groove 36 of the narrowed diameter portion 32 of the lens barrel 30 are provided. Therefore, the lens barrel 30 can be positioned in the radial direction in the insertion opening 11b of the mounting wall portion 11 with further high accuracy, and also the mounting wall portion 11 and the lens barrel 30 can be further appropriately fixed to each other.

In the imaging apparatus 10 according to an embodiment of the present invention, since the lens barrel 30 and the mounting wall portion 11 is fixed to each other by the lens barrel 30, which is tightened relative to the mounting wall portion 11 by screwing the screw groove 11e of the narrowed opening portion 11g of the mounting wall portion 11 with the screw groove 36 of the narrowed diameter portion 32 of the lens barrel 30, it is possible to strengthen further a fixation relationship between the lens barrel 30 and the mounting wall portion 11 as well as suppress change in fixation strength due to temperature change. Accordingly, a high-quality image characteristic can be stably obtained. Therefore, for example, the imaging apparatus 10 can withstand a disturbance of vibrations, and so on and a difference of temperature conditions in an equipped state in a car, and the stable image characteristic can be obtained.

In the imaging apparatus 10 according to an embodiment of the present invention, since the O-ring 23 is compressed between the mounting wall portion 11. and the lens barrel 30 fixed to each other by the lens barrel 30, which is tightened relative to the mounting wall portion 11 by screwing the screw groove 11e of the narrowed opening portion 11g of the mounting wall portion 11 with the screw groove 36 of the narrowed diameter portion 32 of the lens barrel 30, a further secure sealing capability can be obtained.

In the imaging apparatus 10 according to an embodiment of the present invention, since the flat surface portions 37 are provided on the lens barrel 30, the rotation operation of the lens barrel 30, which rotates the lens barrel 30 about the photographing optical axis O, relative to the mounting wall portion 11, that is, a fixation of the lens barrel 30 to the mounting wall portion 11 can be easily performed.

In the imaging apparatus 10 according to an embodiment of the present invention, in the state where the narrowed diameter portion 32 of the lens barrel 30 is inserted into the insertion opening 11b of the mounting wall portion 11, the back end (the bond surface B) relative to the flat surface portion 37 on the outer circumference surface of the narrowed diameter portion 32 of the lens barrel 30 is exposed, that is, the second space, which is to be the first space P1, is formed. Therefore, the rotation operation of the lens barrel 30, which rotates the lens barrel 30 about the photographing optical axis O, relative to the mounting wall portion 11, that is, the easy fixation of the lens barrel 30 to the mounting wall portion 11 can be achieved.

In the imaging apparatus 10 according to an embodiment of the present invention, since the electric equipment substrate portion 50 (the image pickup device 52) is not provided on the back end portion (the other end portion) of the lens barrel 30 when the lens barrel 30 is fixed to the mounting wall portion 11, the easy rotation operation (fixation operation) of the lens barrel 30 to the mounting wall portion 11 can be achieved.

In the imaging apparatus 10 according to an embodiment of the present invention, since the O-ring 23 to seal the gap between the mounting wall portion 11 and the lens barrel 30 is arranged between the orthogonal surface 34 of the lens barrel 30, which is orthogonal to the direction of the photographing optical axis O, and the front side surface 11h of the mounting wall portion 11, which is orthogonal to the direction of the photographing optical axis O, even in a case where the lens barrel 30 is off-centered in any direction of the radial direction in the insertion opening 11b of the mounting wall portion 11, the O-ring 23 is appropriately compressed between the mounting wall portion 11 and the lens barrel 30 without influence of the off-centered lens barrel 30. Therefore, the sealing capability can be appropriately obtained.

In the imaging apparatus 10 according to an embodiment of the present invention, since the back-side case portion 13 is bonded to be sealed to the mounting wall portion 11, it is possible that the lens barrel 30 (the optical element group 40 retained therein) housed in the case 12 and the image pickup device 52 (the electric equipment substrate portion 50) are to have a waterproof capability and a dustproof capability in all directions.

In the imaging apparatus 10 according to an embodiment of the present invention, since the optical element group 40 is retained in the lens barrel 30 as a separate body from the mounting wall portion 11, even in a case where external shapes of the mounting wall potion and the case are changed, the high optical capability can be easily maintained, and also degree of freedom for designing the external shapes can be improved, as described below. In the optical element group 40, the optical elements such as the lenses need to be retained in a positioned state with extremely high accuracy in order to obtain a predetermined optical capability. As in the first embodiment, this becomes especially important in a case where a plurality of the optical elements are used. Therefore, for example, in a case where optical elements are directly retained in the case as the above-mentioned conventional technology (Japanese Patent Laid-Open Publication Number 2009-290527), and the case is to be formed by resin molding, it is necessary to make a mold with extremely high accuracy, whenever an external shape of the case is changed, in order to ensure high accuracy in parts where the optical elements are retained, and the high optical capability is not easily maintained. Further, in a case where optical elements are directly retained in the case, and the case is, for example, to be formed by resin molding, an existence or non-existence of influence (greatness of influence) of various uneven thickness, resin-flow unevenness in the mold, and the like changes in accordance with shapes. Therefore, the external shape of the case itself is limited in order to ensure the accuracy of the case (the parts where the optical elements are retained). On the other hand, in the imaging apparatus 10 according to an embodiment of the present invention, the lens barrel 30 itself is not changed (the lens barrel 30 is commonalized), and only composition parts on the mounting wall portion for the fixation with the lens barrel 30 may be made to be common. Therefore, a change of the external shape of the mounting wall portion does not affect a retainment state of the optical element group 40, that is, the optical capability as well as a design change of the external shape of the mounting wall portion, in contrast in terms of the optical capability.

In the imaging apparatus 10 according to an embodiment of the present invention, since the optical element group 40 is retained in the lens barrel 30 as the separate body from the mounting wall portion 11, and also the electric equipment substrate portion 60 (the image pickup device 52) is fixed to the lens barrel 30, for example, even in a case where the mounting wall portion 11 including the object-side surface S is deformed by external temperature or sunlight irradiation, it is possible to avoid affecting the optically-positionel relationship between the optical element group 40 and the image pickup device 52 (the light receiving surface 52a thereof. Therefore, the high-quality image characteristic can be stably obtained.

In the imaging apparatus 10 according to an embodiment of the present invention, since the imaging apparatus 10 is configured such that the lens barrel 30 (the imaging optical system 20) and the substrate 51 (the image pickup device 52 of the electric equipment substrate portion 50) are positioned and fixed to the mounting wall portion 11 to be sealed, the mounting wall portion 11 is attached to the desired position, for example, so as to constitute a portion of an electronic device or a wall surface of a building, and thereby the imaging apparatus 10 can be easily used as a surveillance camera having the sealing capability in the desired place.

In the imaging apparatus 10 according to an embodiment of the present invention, when the bond structure, in which the lens barrel 30 (the imaging optical system 20) and the substrate 61 (the image pickup device 52 of the electric equipment substrate portion 60) are bonded to each other, is formed, the indirect bond method is at first performed, and then the filling bond method is performed. Therefore, the lens barrel 30 and the substrate 51 can be further strongly bonded to each other in a state where the optically-positional relationship between the image pickup device 52 (the substrate 51) and the optical element group 40 (the lens barrel 30) is maintained.

Accordingly, in the imaging apparatus 10 according to an embodiment of the present invention, the appropriate optical capability can be obtained without interrupting the downsizing while the sealing capability around the optical element (the optical element group 40) is easily ensured without lowering the degree of freedom for designing the case 12.

In addition, in the first embodiment mentioned above, the bond structure, which bonds the electric equipment substrate portion 50 (the substrate 51) and the lens barrel 30, is formed by the indirect bond structure and the filling bond structure. However, if sufficient strength to bond them is obtained by the indirect bond structure, the filling bond structure (the bond layer C6) may not be provided, and it is not limited to the first embodiment mentioned above. Further, if the optically-positional relationship between the electric equipment substrate portion 50 (the substrate 61) and the lens barrel 30 can be maintained in an allowable range, as an imaging apparatus 10' shown in FIG. 19, the imaging apparatus, in which the electric equipment substrate portion 50 (the substrate 51) and the lens barrel 30 are bonded to each other by the filling bond structure (the bond layer C6) without the indirect bond structure, may be made, and it is not limited to the first embodiment mentioned above. The term "allowable range" here is a range, in which the appropriate image can be obtained on the image pickup device 52 (the light receiving surface 52a thereof of which the position is out of alignment, for example, a range, in which amount of positional misalignment, which occurs on the image pickup device 52 (the light receiving surface 52a thereof), in the direction of the photographing optical axis O is within a focal depth in the optical element group 40.

Further, in the first embodiment mentioned above, the ultraviolet cure adhesive is used for forming the bond layer C4 and the bond layer C5 in the indirect bond method. However, if it is possible to maintain the positional relationship by the indirect bond method, for example, the heat cure adhesive and other curable adhesive may be used to form the bond layers C4 and C5, and it is not limited to the first embodiment mentioned above. In this circumstance, it is unnecessary to make each of the intermediate retaining members 54 by use of the ultraviolet ray penetrating material.

Furthermore, in the first embodiment mentioned above, the heat cure adhesive is used for forming of the bond layer C6 in the filling bond method. However, if it is made possible to maintain the positional relationship by the indirect bond method, for example, the ultraviolet cure adhesive and other curable adhesive may be used to form the bond layer C6, and it is not limited to the first embodiment mentioned above.

In the first embodiment mentioned above, the bond layer C6 in the filling bond structure is to pass an inner side of each of the intermediate retaining members 54 and have the annular shape between the lens barrel 30 and the substrate 51. However, the bond layer C6 may surround an outer side of each of the intermediate retaining members 54, and it is not limited to the first embodiment mentioned above. In this circumstance, an easy application (injection) operation of the adhesive for forming the bond layer 06 can be achieved.

In the first embodiment mentioned above, the four flat surface portions 37 are formed on the outer circumference surface of the narrowed diameter portion 32 of the lens barrel 30. However, the retaining portion to easily retain the lens barrel 30 is only required to be formed such that the easy rotation operation of the lens barrel 30, to rotate the lens barrel 30 about the photographing optical axis O relative to the mounting wall portion 11, that is, the easy fixation of the lens barrel 30 to the mounting wall portion 11 are achieved, and it is not limited to the first embodiment mentioned above.

In the first embodiment mentioned above, each of the L-shaped intermediate retaining members 54 is used in the indirect bond method. However, if it is possible for an intermediate retaining member used in the indirect bond method to form the lens-barrel side bond surface to be bonded to the bond surface B (the outer circumference surface) of the narrowed diameter portion 32 of the lens barrel 30 as well as the light-receiving side bond surface to be bonded to the surface 51a (the surface at the side where the image pickup device 52 is mounted) of the substrate 51 of the electric equipment substrate portion 50, a cross-section surface of the intermediate retaining member may have, for example, a rectangular shape or a triangular shape, and it is not limited to the first embodiment mentioned above.

In the first embodiment mentioned above, in the fixation state of the mounting wall portion 11 and the lens barrel 30, the any other composition members do not exist at the external position when the bond surface B of the narrowed diameter portion 32 is viewed in the radial direction. However, if it is possible to perform the operation of the positioning fixation of the imaging apparatus 10, that is, to arrange the intermediate retaining member for the indirect bond method, apply (inject) the adhesive for the filling bond method, irradiate with the ultraviolet rays when the ultraviolet cure adhesive is used, and the like, for example, only a partial angle area of a circumference of the narrowed diameter portion 32 may be opened when viewed in the circumferential direction of the narrowed diameter portion 32, and it is not limited to the first embodiment mentioned above. That is, it is unnecessary that the first space P1 is formed throughout an entirety of the circumference of the narrowed diameter portion 32 when viewed in the circumferential direction of the narrowed diameter portion 32.

In the first embodiment mentioned above, the lens barrel 30 and the mounting wall portion 11 is fixed to each other by the lens barrel 30, which is tightened relative to the mounting wall portion 11 by screwing the screw groove 11e of the narrowed opening portion 11g of the mounting wall portion 11 with the screw groove 36 of the narrowed diameter portion 32 of the lens barrel 30. However, in terms of easily ensuring the sealing capability ranging from the optical element to the image pickup device without interrupting the downsizing, the lens barrel (the one end portion thereof) is pressed in the direction of the photographing optical axis O to the mounting wall portion by being screwed with the lens-barrel side screw groove provided on the outer circumference surface of the lens barrel, so that the lens barrel may be fixed to the mounting wall portion. It is not limited to the first embodiment mentioned above.

### [Second Embodiment]

Next, an imaging apparatus 102 according to a second embodiment of the present invention will be explained. The second embodiment is an example in which the bond structure to bond the electric equipment substrate portion 50 (the substrate 51) and the lens barrel 30 is different from that in the first embodiment. Since a fundamental configuration of the imaging apparatus 102 in the second embodiment is similar to that of the imaging apparatus 10 in the first embodiment mentioned above, the same reference code is used for a part of the same configuration, and a detailed explanation thereof will be omitted. FIG. 20 is a schematic perspective view showing the imaging apparatus 102 according to the second embodiment, which is partially broken, as FIG. 16, for explaining the configuration of the imaging apparatus 102.

The bond structure may include the indirect bond structure having an intermediate retaining member 542 having one end which forms a lens-barrel side bond surface to be bonded to the lens barrel 30 and the other end which forms a light-receiving side bond surface to be bonded to the image pickup device section, a lens-barrel side bond layer, for example, a bond layerC7 provided on the lens-barrel side bond surface, and a light-receiving side bond layer, for example, a bond layerC8 provided on the light-receiving side bond surface, and the intermediate retaining member 542 has an annular shape to surround the image pickup device 52 about the photographing optical axis O.
In the imaging apparatus 102 according to the second embodiment, as shown in FIG. 20, the bond structure is formed by the indirect bond method using the intermediate retaining member 542. The intermediate retaining member 542 forms the bond structure (the indirect bond structure) to bond the image pickup device 52 or the substrate 51 on which the image pickup device 52 is mounted, to the lens barrel 30 by use of the adhesive, while maintaining the state (positional relationship) in which the position of the image pickup device 52 (the light receiving surface 52a thereof) relative to the optical element group 40 is optically positioned in order that the position of the image to be formed by the imaging optical system 20 (the optical element group 40) is to be on the light receiving surface 52a of the image pickup device 52.

The intermediate retaining member 542 has a cylindrical shape capable of allowing the narrowed diameter portion 32 (the bond surface B thereof) of the lens barrel 30 to be inserted into an internal side of the intermediate retaining member 542 as well as positioning the image pickup device 52 in the internal side thereof. Further, a shape of a cross-section surface of the intermediate retaining member 542 is an L-shape when viewed in a rotation direction. Therefore, the intermediate retaining member 542 has a lens-barrel side bonding portion 542a, which forms the lens-barrel side bond surface to be bonded to the bond surface B (the outer circumference surface) of the narrowed diameter portion 32 of the lens barrel 30 in the indirect bond method, and a substrate side bonding portion 542b, which forms the light-receiving side bond surface to be bonded to the surface 51a (the surface of the side on which the image pickup device 52 is mounted) of the substrate 51 of the electric equipment substrate portion 50. In the second embodiment, similarly to the first embodiment, since the ultraviolet cure adhesive is adopted as the adhesive used in the indirect bond method, the intermediate retaining member 542 is made of at least the ultraviolet ray penetrating material.

In the imaging apparatus 102 according to the second embodiment, as in the first embodiment, the assembled imaging optical system 20 and the mounting wall portion 11 are fixed to each other (refer to FIG. 12) before the positioning fixation of the electric equipment substrate portion 50 (the image pickup device 52 mounted on the substrate 51 thereof) relative to the lens barrel 30.

Then, for the positioning of the electric equipment substrate portion 50 relative to the lens barrel 30, the mounting wall portion 11, to which the lens barrel 30 is fixed to be sealed, is retained to be fixed by the case retaining portion 61 as the adjusting device 60 (refer to FIG. 13), and the bond surface B of the narrowed diameter portion 32 of the lens barrel 30 is inserted into the lens-barrel side bonding portion 542a of the intermediate retaining member 542, in which the adhesive is applied to the lens-barrel side bonding portion 542a to form the bond layer C7 as the lens-barrel side bond layer as well as to the substrate side bonding portion 542b to form the bond layer C8 as the light-receiving side bond layer.

Then, the substrate 61 of the electric equipment substrate portion 50 is retained by the image-pickup-device retaining portion 62 (refer to FIG. 13) relative to the mounting wall portion 11 fixed and retained by the case retaining portion 61 so that the up, down, right and left directions of the mounting wall portion 11 are coincident with those in the image obtained on the image pickup device 52, respectively, and the photographing optical axis O of the imaging optical system 20 (the optical element group 40) is positioned at the center in the image obtained on the image pickup device 52.

Then, as in the first embodiment, in a state where the light receiving surface 52a is orthogonal to the photographing optical axis O, the image pickup device 52 (the light receiving surface 62a) is moved in the direction of the photographing optical axis O by use of the image (the object image) displayed on the monitor 70 (refer to FIG. 13), so that the focus adjustment is performed. Further, in a state where the relative positional relationship between the lens barrel 30 and the substrate 51 is maintained, the substrate side bonding portion 542b of the intermediate retaining member 542, in which the bond surface B of the narrowed diameter portion 32 of the lens barrel 30 is inserted into the lens-barrel side bonding portion 542a, is abutted on the surface 51a of the substrate 51 via the bond layer C8.

In a state where the mounting wall portion 11 to which the lens barrel 30 is fixed is retained to be fixed by the case retaining portion 61 (refer to FIG. 13), the substrate 51 (the electric equipment substrate portion 50) in an optically positioned state relative to the lens barrel 30 (the optical element group 40) is retained to be fixed by the image-pickup-device retaining portion 62 (refer to FIG. 13), and the intermediate retaining member 542 is attached to the lens barrel 30 and the substrate 51 without being bound by the any other, the bond layer C7 and the bond layer C8 harden by an irradiation of ultraviolet rays by using the first space P1 (refer to FIG. 13), so that the indirect bond method is performed. Accordingly, the lens barrel 30 and the substrate 51 are bonded to each other via the intermediate retaining member 542 by the adhesion while the optically-set positional relationship is maintained. Therefore, the intermediate retaining member 542 forms the indirect bond structure capable of bonding the lens barrel 30 and the substrate 51 (the image pickup device 52) by the adhesion while the relative positional relationship therebetween is maintained by a cooperation with the bond layer C7 and the bond layer C8.

In the imaging apparatus 102 in the second embodiment, since the annular-shaped intermediate retaining member 542 is used in the indirect bond structure, the filling bond method is not used, similarly to the first embodiment.

In the imaging apparatus 102 in the second embodiment, since a configuration thereof is basically similar to that of the imaging apparatus 10 in the first embodiment, it is basically possible to obtain effects similar to those in the first embodiment.

In addition, in the imaging apparatus 102 in the second embodiment, since the sufficient fixation-strength can be obtained without using the filling bond method in the bond structure, an easy operation of the positioning fixation can be achieved.

Further, in the imaging apparatus 102 in the second embodiment, since the gap between the lens barrel 30 and the substrate 51 is covered with the intermediate retaining member 542, the invasion by the foreign substances onto the light receiving surface 52a of the image pickup device 52 from the outside of the lens barrel 30 can be avoided, and also light from the outside of the lens barrel 30 can be reliably prevented from entering the light receiving surface 52a of the image pickup device 52. Therefore, a further clear image can be obtained.

Accordingly, in the imaging apparatus 102 in the second embodiment, the appropriate optical capability can be obtained without interrupting the downsizing while the sealing capability around the optical element (the optical element group 40) is easily ensured without lowering the degree of freedom for designing the case 12.

In addition, in the second embodiment mentioned above, the ultraviolet cure adhesive is used for forming of the bond layer C7 and the bond layer C8 in the indirect bond method. However, if it is possible to maintain the positional relationship by the indirect bond method, for example, the heat cure adhesive and other curable adhesive may be used to form the bond layers C7 and C8, and it is not limited to the second embodiment mentioned above. In this circumstance, it is unnecessary to make the intermediate retaining member 542 by use of the ultraviolet ray penetrating material.

Further, in the second embodiment mentioned above, the annular-shaped intermediate retaining member 542 having the cross-section surface which is L-shaped when viewed in the rotation direction is used. However, if it is possible for an intermediate retaining member used in the indirect bond method to form the lens-barrel side bond surface to be bonded to the bond surface B (the outer circumference surface) of the narrowed diameter portion 32 of the lens barrel 30 as well as the light-receiving side bond surface to be bonded to the surface 51a (the surface of the side on which the image pickup device 52 is mounted) of the substrate 51 of the electric equipment substrate portion 50, a cross-section surface of the intermediate retaining member may have, for example, a rectangular shape or a triangular shape, and it is not limited to the second embodiment mentioned above.

### [Third Embodiment]

Next, an imaging apparatus 103 according to a third embodiment of the present invention will be explained. The third embodiment is an example in which the bond structure to bond an electric equipment substrate portion 503 (the substrate 51) and the lens barrel 30 is different from the first and second embodiments. Since a fundamental configuration of the imaging apparatus 103 in the third embodiment is similar to that of the imaging apparatus 10 in the first embodiment mentioned above, the same reference code is used for a part of the same configuration, and a detailed explanation thereof will be omitted. FIG. 21 is a schematic perspective view showing the imaging apparatus 103 according to the third embodiment, which is partially broken similarly to FIG. 2, for explaining the configuration of the imaging apparatus 103. FIG. 22 is a schematic perspective view showing the imaging apparatus 103 according to the third embodiment, which is partially broken similarly to FIG. 16, for explaining the configuration of the imaging apparatus 103. FIG. 23 is a schematic side view showing the imaging apparatus 103 according to the third embodiment, which is partially broken similarly to FIG. 17, for explaining the configuration of the imaging apparatus 103. FIG. 24 is a schematic perspective view, as FIG. 18, for explaining the configuration of the imaging apparatus 103 according to the third embodiment.

In the imaging apparatus 103 according to the third embodiment, as shown FIGs. 21 to 24, an image pickup device 523 is configured to be directly bonded to the lens barrel 30 in the bond structure to bond the electric equipment substrate portion 503 to the lens barrel 30 by the adhesion. In the electric equipment substrate portion 503, a size of the image pickup device 523 is to be approximately equal to that of the substrate 51 when viewed in the direction of the photographing optical axis O.

In the imaging apparatus 103, the assembled imaging optical system 20 and the mounting wall portion 11 are fixed to each other (refer to FIG. 12), as in the first embodiment before the positioning fixation of the electric equipment substrate portion 503 (the image pickup device 523 mounted on the substrate 51 thereof) relative to the lens barrel 30. Further, the lens barrel 30 (the optical element group 40 retained therein) and the image pickup device 523 are optically positioned (the focus adjustment is performed) by use of the adjusting device 60 (refer to FIG. 13).

Then, in a state where the relative positional relationship between the lens barrel 30 and the image pickup device 523 (the electric equipment substrate portion 503) is maintained, each of the intermediate retaining members 54, in which the adhesive is applied to the lens-barrel side bonding portion 54a to form the bond layer C4 as well as to the substrate side bonding portion 54b to form the bond layer C5, is arranged so as to be the bridge between the lens barrel 30 and the image pickup device 523 (the electric equipment substrate portion 503). In the third embodiment, the lens-barrel side bonding portions 54a of the intermediate retaining members 54 are attached to the bond surface B on the outer circumference surface of the narrowed diameter portion 32 of the lens barrel 30, respectively. Further, the substrate side bonding portion 54b of each of the intermediate retaining members 54 is attached to an area other than an available area (an effective light-receiving area) on a light receiving surface 523a of the image pickup device 523. In the third embodiment, the ultraviolet cure adhesive is adopted in order to form the bond layer C4 and the bond layer C5. Each of the intermediate retaining members 54 is attached to the lens barrel 30 and the image pickup device 523, which are optically positioned relative to each other, so as to be the bridge between them by the bond layer C4 and the bond layer C5.

Then, in a state where the mounting wall portion 11, to which the lens barrel 30 is fixed, as well as the image pickup device 523 (the electric equipment substrate portion 503) in an optically positioned state relative to the lens barrel 30 (the optical element group 40) are retained to be fixed, and each of the intermediate retaining members 54 is attached to the lens barrel 30 and the image pickup device 523 without being bound by the any other, the bond layer C4 and the bond layer C5 harden by an irradiation of ultraviolet rays by using the first space P1 (refer to FIG. 13), so that the indirect bond method is performed. Accordingly, even after the fixation retainment is released, the lens barrel 30 and the image pickup device 523 are bonded to each other via each of the intermediate retaining members 54 by the adhesion while an optically-set positional relationship is maintained.

In the third embodiment, after the indirect bond method using each of the intermediate retaining members 54 mentioned above, as in the first embodiment, the bond layer C6 is formed by the heat cure adhesive, .so that the filling bond method is performed. The bond layer C6 is provided in the annular shape along an outer edge portion of the back end of the lens barrel 30 (the external position of the inner edge projection portion 39) and is not to interfere at least in the available area (the effective light-receiving area) on the light receiving surface 523a of the image pickup device 523.

In the imaging apparatus 103 in the third embodiment, since a configuration thereof is basically similar to that of the imaging apparatus 10 in the first embodiment, it is basically possible to obtain effects similar to those in the first embodiment.

In addition, in the imaging apparatus 103 in the third embodiment, since the number of members used for bonding of the lens barrel 30 and the image pickup device 523 can be reduced, it is possible to reduce influence of deformations due to manufacturing error and temperature change in each of the members. Therefore, the image characteristic with further high accuracy can be obtained.

Further, in the imaging apparatus 103 in the third embodiment, in comparison with the configurations of the first and second embodiments, since it is possible to use the image pickup device 523 which is large-sized relative to the lens barrel 30 (the optical element group 40) and the substrate 51, a further clear image can be obtained.

Furthermore, in the imaging apparatus 103 in the third embodiment, in comparison with the configurations of the first and second embodiments, since it is possible to use the lens barrel 30 (the optical element group 40), the substrate 51, and so on which are small-sized relative to the image pickup device 523, it can greatly contribute to downsizing of the imaging apparatus 103.

Accordingly, in the imaging apparatus 103 in the third embodiment, the appropriate optical capability can be obtained without interrupting the downsizing while the sealing capability around the optical element (the optical element group 40) is easily ensured without lowering the degree of freedom for designing the case 12.

In addition, in the third embodiment mentioned above, the ultraviolet cure adhesive is used for forming the bond layer C4 and the bond layer C6 in the indirect bond method. However, if it is possible to maintain the positional relationship by the indirect bond method, the heat cure adhesive and other curable adhesive, for example, may be used to form the bond layers C4 and C5, and it is not limited to the third embodiment mentioned above. In this circumstance, it is unnecessary to make each of the intermediate retaining members 54 by use of the ultraviolet ray penetrating material.

Further, in the third embodiment mentioned above, the heat cure adhesive is used for forming the bond layer C6 in the filling bond method. However, if it is possible to maintain the positional relationship by the indirect bond method, the ultraviolet cure adhesive and other curable adhesive, for example, may be used to form the bond layer C6, and it is not limited to the third embodiment mentioned above.

Furthermore, in the third embodiment mentioned above, each of the L-shaped intermediate retaining members 54 is used in the indirect bond method. However, if it is possible for an intermediate retaining member used in the indirect bond method to form the lens-barrel side bond surface to be bonded to the bond surface B (the outer circumference surface) of the narrowed diameter portion 32 of the lens barrel 30 as well as the light-receiving side bond surface to be bonded to the light receiving surface 523a of the image pickup device 523 of the electric equipment substrate portion 503, a cross-section surface of the intermediate retaining member may have, for example, a rectangular shape or a triangular shape, or the cross-section surface of the intermediate retaining member may have a cylindrical shape as in the second embodiment. It is not limited to the third embodiment mentioned above.

In addition, in the above-mentioned embodiments, the imaging apparatus 10 (10'), the imaging apparatus 102, and the imaging apparatus 103 each according to an embodiment of the present invention have been explained, respectively. However, if an imaging apparatus includes at least one optical element configured to form an image of an object, a lens barrel retaining the at least one optical element, an image pickup device section having an image pickup device configured to obtain the image of the object formed by the at least one optical element, a mounting wall portion configured to surround a circumference of one end portion of the lens barrel at a side of the object, a lens-barrel side screw groove provided on an outer circumference surface of the lens barrel, a screw fixation section provided on the mounting wall portion and configured to fix the lens barrel to the mounting wall portion and allow the one end portion of the lens barrel to be pressed to the mounting wall portion in a direction of a photographing optical axis by screwing with the lens-barrel side screw groove, and a bond structure configured to bond the other end portion of the lens barrel to the image pickup device section in a state where an optically-positional relationship between the image pickup device and the at least one optical element is maintained, it is not limited to each of the above-mentioned embodiments.

In each of the above-mentioned embodiments, although the optical element group 40 includes the lens 41, the lens 42, the lens 43, the aperture stop 44, the lens 45, the lens 46, and the lens 47, the optical element group 40 is required to have at least one optical element and be configured to form an image at an arbitrary position in order to obtain the image, and to be retained in the lens barrel 30 in the configuration mentioned above, and therefore it is not limited to each of the above-mentioned embodiments.

In each of the above-mentioned embodiments, regarding the intermediate retaining member used in the indirect bond method, the lens-barrel side bond surface to be bonded to the narrowed diameter portion 32 of the lens barrel 30 and the light-receiving side bond surface to be bonded to the image pickup device section such as the substrate 51 or the image pickup device 523 of the electric equipment substrate portion 50 or 603 are orthogonal to each other. However, if the image pickup device 52 (523) or the substrate 51 where the image pickup device 52 (523) is mounted is bonded to the lens barrel 30 by use of the adhesive while maintaining the state (the positional relationship), in which the position of the image pickup device 52 (523) (the light receiving surface 62a (523a) thereof) relative to the optical element group 40 is optically positioned, for example, the intermediate retaining member, in which the lens-barrel side bond surface and the light-receiving side bond surface are formed on positions of both ends on a plane of a long plate-like member, may be used, and it is not limited to each of the above-mentioned embodiments. In this case, the light-receiving side bond surface may be made so as to abut on (bond to) a side surface of the substrate 51 or the image pickup device 52 (523) via the bond layer.

Although the imaging apparatus according to an embodiment of the present invention has been explained on the basis of each of the embodiments as mentioned above, a specific configuration thereof is not limited to each of these embodiments, and a change of design, an addition of design, and the like may be allowed without departing from the scope of the present invention.

In the imaging apparatus 10 (10', 102, 103) according to an embodiment of the present invention, after the position of the image pickup device 52 (523) is optically set relative to the optical element of the lens barrel 30 fixed to the mounting wall portion 11, the substrate 51 or the image pickup device 62 (523) is bonded to the other end portion of the lens barrel 30 by the bond structure, and thereby it is possible to maintain the optically-positional relationship between the image pickup device 52 (523) and the optical element. Therefore, the appropriate optical capability can be obtained.

Further, since the mounting wall portion 11 and the lens barrel 30 can be fixed to each other by the screw fixation section in the state where the one end portion of the lens barrel 30 is pressed to the mounting wall portion 11 in the direction of the photographing optical axis O, the sealing member is arranged at the part, at which the lens barrel 30 and the mounting wall portion 11 abut each other, and thereby the sufficient sealing capability between the mounting wall portion 11 and the lens barrel 30 from the side of the object-side surface S of the mounting wall portion 11 can be easily ensured.

Furthermore, since the mounting wall portion 11 and the lens barrel 30 can be fixed to each other by the rotation of the lens barrel 30 relative to the mounting wall portion 11, and also the other end portion of the lens barrel 30 fixed to the mounting wall portion 11 and the substrate 51 or the image pickup device 52 (523) can be bonded to each other by the bond structure, it is unnecessary to provide a cutout on the substrate 51, on which the image pickup device 52 (523) is mounted, for a fixation of the other end portion of the lens barrel 30 and the substrate 51 or the image pickup device 52 (523). Therefore, the sealing capability can be ensured without interrupting the downsizing.

Then, since the lens barrel 30 is easily fixed to be sealed to the mounting wall portion 11 including the object-side surface S, and the image pickup device 523 can be bonded to the lens barrel 30 in an optically-appropriate state, the mounting wall portion 11 can be made so that the up, down, right and left directions thereof can be specified in accordance with the shape of the object-side surface S, and the mounting wall portion 11 can be used for the case 12, of which the up, down, right and left directions can be specified in accordance with the external shape thereof.

In particular, in a case where the image pickup device 523 is fixed to the other end portion of the lens barrel 30, since the number of the members used for bonding the lens barrel 30 and the image pickup device 523 can be reduced, it is possible to reduce the influence of the deformations due to the manufacturing error and the temperature change in each of the members. Therefore, the image characteristic with further high accuracy can be obtained.

In addition to the configuration mentioned above, in a case where the bond structure includes the indirect bond structure having the intermediate retaining member 54 (542) having the one end which forms the lens-barrel side bond surface to be bonded to the lens barrel 30 and the other end which forms the light-receiving side bond surface to be bonded to the substrate 51 or the image pickup device 52 (523), the lens-barrel side bond layer C4 (C7) provided on the lens-barrel side bond surface, and the light-receiving side bond layer C5 (C8) provided on the light-receiving side bond surface, the optically-positional relationship between the image pickup device 52 (523) and the optical element in the simple configuration can be maintained by the indirect bond structure.

In addition to the configuration mentioned above, in a case where the bond structure includes the filling bond structure having the filling bond layer C6 which fills the gap between the other end portion of the lens barrel 30 and either the substrate 51 or the image pickup device 52 (523) in a state where the image pickup device 52 (523) and the optical element are optically positioned, the invasion by the foreign substances onto the light receiving surface 52a (523a) of the image pickup device 52 (523) from the outside of the lens barrel 30 can be avoided.

In addition to the configuration mentioned above, in a case where the bond structure includes the indirect bond structure having the intermediate retaining member (54, 542) having the one end which forms the lens-barrel side bond surface to be bonded to the lens barrel 30 and the other end which forms the light-receiving side bond surface to be bonded to either the substrate 51 or the image pickup device 52 (523), the lens-barrel side bond layer C4 (C7) provided on the lens-barrel side bond surface, and the light-receiving side bond layer C5 (C8) provided on the light-receiving side bond surface, and the filling bond structure having the filling bond layer C6 which fills the gap between the other end portion of the lens barrel 30 and either the substrate 51 or the image pickup device 62 (523), the filling bond structure being formed after forming the indirect bond structure, the optically-positional relationship between the image pickup device 52 (523) and the optical element by the indirect bond structure in the simple configuration can be maintained, the strength to bond either the substrate 51 or the image pickup device 52 (523) to the lens barrel 30 can be increased by the filling bond structure in a state where the positional relationship is maintained, and also the invasion by the foreign substances onto the light receiving surface 52a (523a) of the image pickup device 52 (523) from the outside of the lens barrel 30 can be avoided.

In addition to the configuration mentioned above, in a case where the mounting wall portion 11 has the stepped penetration opening 11b having two concentric circular shapes when viewed from the side of the object in the direction of the photographing optical axis O and the orthogonal surface 11h which is orthogonal to the photographing optical axis O at the stepped part in the stepped penetration opening 11b, the lens barrel 30 having the larger external diameter at the side of the one end portion than at the side of the other end portion has the stepped external shape and the orthogonal surface 34 which is orthogonal to the photographing optical axis O at the stepped part between the side of the one end portion and the side of the other end portion, and the sealing member is arranged between the orthogonal surface 11h of the mounting wall portion 11 and the orthogonal surface 34 of the lens barrel 30, the sealing member can be compressed in the direction of the photographing optical axis O as a fixation direction by the screw fixation section. Therefore, the gap between the mounting wall portion 11 and the lens barrel 30 from the side of the object-side surface S of the mounting wall portion 11 can be further appropriately sealed.

In addition to the configuration mentioned above, in a case where the retaining portion 37 for the rotation operation of the lens barrel 30 to rotate the lens barrel 30 about the photographing optical axis O relative to the mounting wall portion 11 at the inner side of the mounting wall portion 11 is provided on the outer circumference surface of the lens barrel 30 in a state where the lens barrel 30 is inserted into the stepped penetration opening 11b of the mounting wall portion 11, the easy rotation operation of the lens barrel 30 relative to the mounting wall portion 11 for the fixation of the mounting wall portion 11 and the lens barrel 30 by the screw fixation section can be achieved. Therefore, the mounting wall portion 11 and the lens barrel 30 can be further appropriately fixed.
In addition to the configuration mentioned above, in a case where the bond structure includes the indirect bond structure having the intermediate retaining member 54 (542) having the one end which forms the lens-barrel side bond surface to be bonded to the lens barrel 30 and the other end which forms the light-receiving side bond surface to be bonded to either the substrate 51 or the image pickup device 52 (523), the lens-barrel side bond layer C4 (C7) provided on the lens-barrel side bond surface, and the light-receiving side bond layer C5 (C8) provided on the light-receiving side bond surface, and the intermediate retaining member (54, 542) has the annular shape to surround the image pickup device 52 (523) about the photographing optical axis O, the image pickup device 52 (623) and the lens barrel 30 can be further strongly bonded to each other in a state where the optically-positional relationship between the image pickup device 52 (523) and the optical element by the indirect bond structure in the simple configuration is maintained, and also the invasion by the foreign substances onto the light receiving surface 52a (523a) of the image pickup device 62 (523) from the outside of the lens barrel 30 can be avoided.

In addition to the configuration mentioned above, in a case where the bond structure includes the filling bond structure having the filling bond layer C6 which fills the gap between the other end portion of the lens barrel 30 and either the substrate 51 or the image pickup device 52 (523) in a state where the image pickup device 52 (523) and the optical element are optically positioned, and the filling bond layer C6 is formed by the adhesive having the light blocking effect, the invasion by the foreign substances onto the light receiving surface 52a (523a) of the image pickup device 52 (523) from the outside of the lens barrel 30 can be avoided, and also the light from the outside of the lens barrel 30 can be reliably prevented from centering the light receiving surface 52a (523a) of the image pickup device 52 (523).

In addition to the configuration mentioned above, in a case where the box-shaped member 13 having the one end to be opened is bonded to the mounting wall portion 11 in the opposite side to the object-side surface S of the mounting wall portion 11, so that the mounting wall portion 11 cooperates with the box-shaped member 13 to form the case 12 housing the lens barrel 30 and the image pickup device 62 (523), the imaging apparatus 10 (10', 102, 103) can be made to have the high optical capability and the sealing capability in all directions even though the entirety thereof is in the small configuration.

Since the in-vehicle camera, in which the imaging apparatus 10 (10', 102, 103) in the above-mentioned configuration is used, can be made to have the sufficient sealing capability between the mounting wall portion 11 and the lens barrel 30 from the side of the object-side surface S of the mounting wall portion 11 and the appropriate optical capability in spite of the small configuration, it can be attached to an arbitrary position, and a driver's visual contact can be appropriately assisted even in an environment with much rain, humidity, or dust.
Although the present invention has been described in terms of exemplary embodiments, it is not limited thereto. It should be appreciated that variations may be made in the embodiments described by persons skilled in the art without departing from the scope of the present invention as defined by the following claims.

## Claims

1. An imaging apparatus (10, 10', 102, 103), comprising:
at least one optical element (41 to 47) configured to form an image of an object;
a lens barrel (30) retaining the at least one optical element (41 to 47);
an image pickup device section (51,52,523) having an image pickup device (52, 523) and configured to obtain the image of the object formed by the at least one optical element (41 to 47);
a mounting wall portion (11) surrounding one end portion of the lens barrel (30) at an object side;
a lens-barrel side screw groove (36) provided on an outer circumference surface of the lens barrel (30);
a bond structure (54, 542) configured to bond the other end portion of the lens barrel (30) to the image pickup device section (51, 52, 523) in a state where an optically-positional relationship between the image pickup device (52, 523) and the at least one optical element (41 to 47) is maintained,
a screw fixation section (11d, 11e) provided on the mounting wall portion (11) and configured to screw with the lens-barrel side screw groove (36) to fix the lens barrel (30) to the mounting wall portion (11) while pressing the one end portion of the lens barrel (30) against the mounting wall portion (11) in a direction of a photographing optical axis (O); wherein
the bond structure (54, 542) includes an indirect bond structure having
an intermediate retaining member (54, 542) having one end which forms a lens-barrel side bond surface to be bonded to the lens barrel (30) and the other end which forms a light-receiving side bond surface to be bonded to the image pickup device section (51, 52, 523),
a lens-barrel side bond layer (C4, C7) provided on the lens-barrel side bond surface, and
a light-receiving side bond layer (C5, C8) provided on the light-receiving side bond surface.

2. The imaging apparatus (10, 10', 102, 103) according to claim 1, wherein
the image pickup device section (61, 62, 523) has a substrate (61) on which the image pickup device (52, 523) is provided; and
the bond structure (54, 542) is configured to bond the other end portion of the lens barrel (30) to the substrate (51) of the image pickup device section (51,52, 523) in a state where the optically-positional relationship between the image pickup device (62, 623) and the at least one optical element (41 to 47) is maintained.

3. The imaging apparatus (10, 10', 102, 103) according to claim 1, wherein
the bond structure (54, 542) is configured to bond the other end portion of the lens barrel (30) to the image pickup device (52, 523) of the image pickup device section (51, 62, 623) in a state where the optically-positional relationship between the image pickup device (52, 523) and the at least one optical element (41 to 47) is maintained.

4. The imaging apparatus (10, 10', 102, 103) according to anyone of claims 1 to 3, wherein
the bond structure (54, 542) includes a filling bond structure having a filling bond layer (C6) to fill a gap between the other end portion of the lens barrel (30) and the image pickup device section (51, 52, 523) in a state where the image pickup device (52, 523) and the at least one optical element (41 to 47) are optically positioned.

5. The imaging apparatus (10, 10', 102, 103) according to anyone of claims 1 to 3, wherein
the indirect bond structure (54, 542) further includes
a filling bond structure having a filling bond layer (C6) to fill a gap between the other end portion of the lens barrel (30) and the image pickup device section (51, 52, 523), the filling bond structure being formed after forming the indirect bond structure.

6. The imaging apparatus (10, 10', 102, 103) according to anyone of claims 1 to 5, wherein
the mounting wall portion (11) has a stepped penetration opening (11b) having two concentric circular shapes when viewed from the object side in the direction of the photographing optical axis (O) and an orthogonal surface (11h) orthogonal to the photographing optical axis (O) at a stepped part of the stepped penetration opening (11b);
the lens barrel (30) having a larger external diameter at a side of the one end portion than that at a side of the other end portion has a stepped external shape and an orthogonal surface (34) orthogonal to the photographing optical axis (O) at a stepped part between the side of the one end portion and the side of the other end portion; and
a sealing member is arranged between the orthogonal surface (11h) of the mounting wall portion (11) and the orthogonal surface (34) of the lens barrel (30).

7. The imaging apparatus (10, 10', 102, 103) according to claim 6, further comprising
a retaining portion (37) provided on the outer circumference surface of the lens barrel (30) and is configured to rotate the lens barrel (30) about the photographing optical axis (O) relative to the mounting wall portion (11) at an inner side of the mounting wall portion (11) in a state where the lens barrel (30) is inserted into the stopped penetration opening (11b) of the mounting wall portion (11).

8. The imaging apparatus (10, 10', 102, 103) according to any one of claims 1 to 7, wherein
the bond structure (54, 542) includes an indirect bond structure having
an intermediate retaining member (54, 542) having one end which forms a lens-barrel side bond surface to be bonded to the lens barrel (30) and the other end which forms a light-receiving side bond surface to be bonded to the image pickup device section (51,52,523),
a lens-barrel side bond layer (C4, C7) provided on the lens-barrel side bond surface, and
a light-receiving side bond layer (C5, C8) provided on the light-receiving side bond surface; and
the intermediate retaining member (54, 542) has an annular shape to surround the image pickup device (52, 523) about the photographing optical axis (O).

9. The imaging apparatus (10, 10', 102, 103) according to any one of claims 1 to 7, wherein
the bond structure (54, 542) includes a filling bond structure having a filling bond layer (C6) which fills a gap between the other end portion of the lens barrel (30) and the image pickup device section (51, 52, 523) in a state where the image pickup device (52, 523) and the at least one optical element (41 to 47) are optically positioned; and
the filling bond layer (C6) is formed by an adhesive having a light blocking effect.

10. The imaging apparatus (10, 10', 102, 103) according to anyone of claims 1 to 9, further comprising:
a box-shaped member (13) having one end to be opened and configured to cooperate with the mounting wall portion to be bonded to the mounting wall portion 11), to form a case (12) housing the lens barrel (30) and the image pickup device (62, 623).

11. An in-vehicle camera, comprising:
the imaging apparatus (10, 10', 102, 103) according to anyone of claims 1 to 10.

## Patentansprüche

1. Abbildungsvorrichtung (10, 10', 102, 103), die umfasst:
wenigstens ein optisches Element (41 bis 47), das konfiguriert ist, ein Bild eines Objekts zu erzeugen;
einen Objektivtubus (30), der wenigstens ein optisches Element (41 bis 47) aufnimmt;
einen Bildaufnahmeeinrichtungsabschnitt (51, 52, 523), der eine Bildaufnahmeinrichtung (52, 523) aufweist und konfiguriert ist, das Bild des Objekts, das von dem wenigstens einen optischen Element (41 bis 47) erzeugt wird, zu erhalten;
einen Montagewandabschnitt (11), der einen Endabschnitt des Objektivtubus (30) auf einer Objektseite umgibt;
eine Schraubnut (36) der Objektivtubusseite, die auf einer äußeren Umfangsfläche des Objektivtubus (30) vorgesehen ist;
eine Verbindungsstruktur (54, 542), die konfiguriert ist, den anderen Endabschnitt des Objektivtubus (30) mit dem Bildaufnahmeeinrichtungsabschnitt (51, 52, 523) in einem Zustand zu verbinden, in dem eine optische Positionsbeziehung zwischen der Bildaufnahmeeinrichtung (52, 523) und dem wenigstens einen optischen Element (41 bis 47) aufrecht erhalten wird,
einen Schraubbefestigungsabschnitt (11 d, 11 e), der auf dem Montagewandabschnitt (11) vorgesehen ist und konfiguriert ist, mit der Schraubnut (36) der Objektivtubusseite verschraubt zu werden, um den Objektivtubus (30) an dem Montagewandabschnitt (11) zu befestigen, während er den einen Endabschnitt des Objektivtubus (30) gegen den Montagewandabschnitt (11) in einer Richtung einer photographischen optischen Aufnahmeachse (O) drängt; wobei
die Verbindungsstruktur (54, 542) eine indirekte Verbindungsstruktur enthält, die ein dazwischen liegendes Rückhalteelement (54, 542) aufweist, das ein Ende, das eine Verbindungsfläche auf der Objektivtubusseite bildet, um mit dem Objektivtubus (30) verbunden zu sein, und das andere Ende, das eine Verbindungsfläche der lichtaufnehmenden Seite bildet, um mit dem Bildaufnahmeeinrichtungsabschnitt (51, 52, 523) verbunden zu sein, aufweist,
eine Verbindungsschicht (C4, C7) der Objektivtubusseite, die auf der Verbindungsfläche der Objektivtubusseite vorgesehen ist, und
eine Verbindungsschicht (C5, C8), die auf der lichtaufnehmenden Seite der Verbindungsfläche vorgesehen ist.

2. Abbildungsvorrichtung (10, 10', 102, 103) nach Anspruch 1, wobei
der Bildaufnahmeeinrichtungsabschnitt (61, 62, 523) ein Substrat (61) aufweist, auf dem die Bildaufnahmeeinrichtung (52, 523) vorgesehen ist; und
die Verbindungsstruktur (54, 542) konfiguriert ist, den anderen Endabschnitt des Objektivtubus (30) mit dem Substrat (51) des Bildaufnahmeeinrichtungsabschnitts (51, 51,52, 523) in einem Zustand zu verbinden, in dem die optische Positionsbeziehung zwischen der Bildaufnahmeeinrichtung (62, 623) und dem wenigstens einen optischen Element (41 bis 47) aufrecht erhalten wird.

3. Abbildungsvorrichtung (10, 10', 102, 103) nach Anspruch 1, wobei
die Verbindungsstruktur (54, 542) konfiguriert ist, den anderen Endabschnitt des Objektivtubus (30) mit der Bildaufnahmeeinrichtung (52, 523) des Bildaufnahmeeinrichtungsabschnitts (51, 62, 623) in einem Zustand zu verbinden, in dem die optische Positionsbeziehung zwischen der Bildaufnahmeeinrichtung (52, 523) und dem wenigstens einen optischen Element (41 bis 47) aufrecht erhalten wird.

4. Abbildungsvorrichtung (10, 10', 102, 103) nach einem der Ansprüche 1 bis 3, wobei
die Verbindungsstruktur (54, 542) eine Füllverbindungsstruktur enthält, die eine Füllverbindungsschicht (C6) aufweist, um einen Spalt zwischen dem anderen Endabschnitt des Objektivtubus (30) und dem Bildaufnahmeeinrichtungsabschnitt (51, 52, 523) in einem Zustand zu füllen, in dem die Bildaufnahmeeinrichtung (52, 523) und das wenigstens eine optische Element (41 bis 47) optisch positioniert sind.

5. Abbildungsvorrichtung (10, 10', 102, 103) nach einem der Ansprüche 1 bis 3, wobei
die indirekte Verbindungsstruktur (54, 542) ferner enthält:
eine Füllverbindungsstruktur, die eine Füllverbindungsschicht (C6) aufweist, um einen Spalt zwischen dem anderen Endabschnitt des Objektivtubus (30) und dem Bildaufnahmeeinrichtungsabschnitt (51, 52, 523) zu füllen, wobei die Füllverbindungsstruktur nach dem Bilden der indirekten Verbindungsstruktur gebildet wird.

6. Abbildungsvorrichtung (10, 10', 102, 103) nach einem der Ansprüche 1 bis 5, wobei
der Montagewandabschnitt (11) eine gestufte Durchgangsöffnung (11b) aufweist, die zwei konzentrische runde Formen, wenn sie von der Objektseite in Richtung der photographischen optischen Achse (O) gesehen wird, und eine orthogonale Oberfläche (11h) orthogonal zu der photographischen optischen Achse (O) an einem gestuften Abschnitt der gestuften Durchgangsöffnung (11 b) aufweist;
der Objektivtubus (30), der einen größeren äußeren Durchmesser auf einer Seite des Endabschnitts an einem Ende als auf einer Seite des anderen Endabschnitts aufweist, eine gestufte äußere Form und eine orthogonale Oberfläche (34) orthogonal zu der photographischen optischen Achse (O) an einem gestuften Abschnitt zwischen der Seite des einen Endabschnitts und der Seite des anderen Endabschnitts aufweist; und
ein Verschlusselement zwischen der orthogonalen Oberfläche (11h) des Montagewandabschnittes (11) und der orthogonalen Oberfläche (34) des Objektivtubus (30) angeordnet ist.

7. Abbildungsvorrichtung (10, 10', 102, 103) nach Anspruch 6, die ferner umfasst:
einen Rückhalteabschnitt (37), der an der äußeren Umfangsfläche des Objektivtubus (30) vorgesehen ist und konfiguriert ist, den Objektivtubus (30) um die photographische optische Achse (O) in Bezug auf den Montagewandabschnitt (11) an einer Innenseite des Montagewandabschnitts (11) in einem Zustand zu drehen, in dem der Objektivtubus (30) in die gestufte Durchgangsöffnung (11b) des Montagewandabschnitts (11) eingeführt ist.

8. Abbildungsvorrichtung (10, 10', 102, 103) nach einem der Ansprüche 1 bis 7, wobei
die Verbindungsstruktur (54, 542) eine indirekte Verbindungsstruktur enthält, die umfasst:
ein dazwischen liegendes Rückhalteelement (54, 542), das ein Ende, das eine Verbindungsfläche auf der Objektivtubusseite bildet, um mit dem Objektivtubus (30) verbunden zu sein, und das andere Ende, das eine Verbindungsfläche der lichtaufnehmenden Seite bildet, um mit dem Bildaufnahmeeinrichtungsabschnitt (51, 52, 523) verbunden zu sein, aufweist,
eine Verbindungsschicht (C4, C7) der Objektivtubusseite, die auf der Verbindungsfläche der Objektivtubusseite vorgesehen ist, und
eine Verbindungsschicht (C5, C8) der lichtaufnehmenden Seite, die auf der lichtaufnehmenden Seite der Verbindungsfläche vorgesehen ist; und
das dazwischen liegende Halteelement (54, 542) eine Ringform aufweist, um die Bildaufnahmeeinrichtung (52, 523) um die photographische optische Achse (O) zu umgeben.

9. Abbildungsvorrichtung (10, 10', 102, 103) nach einem der Ansprüche 1 bis 7, wobei
die Verbindungsstruktur (54, 542) eine Füllverbindungsstruktur enthält, die eine Füllverbindungsschicht (C6) aufweist, die einen Spalt zwischen dem anderen Endabschnitt des Objektivtubus (30) und dem Bildaufnahmeeinrichtungsabschnitt (51, 52, 523) in einem Zustand füllt, in dem die Bildaufnahmeeinrichtung (52, 523) und das wenigstens eine optische Element (41 bis 47) optisch positioniert sind; und
die Füllverbindungsschicht (C6) durch einen Klebstoff gebildet ist, der einen Lichtsperreffekt aufweist.

10. Abbildungsvorrichtung (10, 10', 102, 103) nach einem der Ansprüche 1 bis 9, die ferner umfasst:
ein kastenförmiges Element (13), das ein Ende, das geöffnet werden kann, aufweist und konfiguriert ist, mit dem Montagewandabschnitt zusammenzuwirken, um mit dem Montagewandabschnitt (11) verbunden zu sein, um ein Gehäuse (12) zu bilden, das den Objektivtubus (30) und die Bildaufnahmevorrichtung (62, 623) aufnimmt.

11. Fahrzeuginterne Kamera, die umfasst:
die Abbildungsvorrichtung (10, 10', 102, 103) nach einem der Ansprüche 1 bis 10.

## Revendications

1. Appareil d'imagerie (10, 10', 102, 103) comprenant :
au moins un élément optique (41 à 47) configuré pour former une image d'un objet ;
un barillet de lentille (30) retenant le au moins un élément optique (41 à 47) ;
une section de dispositif de prise d'image (51, 52, 523) ayant un dispositif de prise d'image (52, 523) et configurée pour obtenir l'image de l'objet formé par le au moins un élément optique (41 à 47) ;
une partie de paroi de montage (11) entourant une partie d'extrémité du barillet de lentille (30) d'un côté de l'objet ;
une rainure de vis du côté du barillet de lentille (36) prévue sur une surface circonférentielle externe du barillet de lentille (30) ;
une structure de liaison (54, 542) configurée pour relier l'autre partie d'extrémité du barillet de lentille (30) à la section de dispositif de prise d'image (51, 52, 523) dans un état dans lequel une relation optiquement positionnelle entre le dispositif de prise d'image (52, 523) et le au moins un élément optique (41 à 47) est maintenue,
une section de fixation de vis (11d, 11e) prévue sur la partie de paroi de montage (11) et configurée pour se visser avec la rainure de vis du côté du barillet de lentille (36) pour fixer le barillet de lentille (30) sur la partie de paroi de montage (11) tout en comprimant une partie d'extrémité du barillet de lentille (30) contre la partie de paroi de montage (11) dans une direction d'un axe optique photographique (O) ; dans lequel
la structure de liaison (54, 542) comprend une structure de liaison indirecte ayant
un élément de retenue intermédiaire (54, 542) ayant une extrémité qui forme une surface de liaison du côté du barillet de lentille destinée à être reliée au barillet de lentille (30) et l'autre extrémité qui forme une surface de liaison du côté de réception de lumière destinée à être reliée à la section de dispositif de prise d'image (51, 52, 523),
une couche de liaison du côté du barillet de lentille (C4, C7) prévue sur la surface de liaison du côté du barillet de lentille, et
une couche de liaison du côté de réception de lumière (C5, C8) prévue sur la surface de liaison du côté de réception de lumière.

2. Appareil d'imagerie (10, 10', 102, 103) selon la revendication 1, dans lequel
la section de dispositif de prise d'image (61, 62, 523) a un substrat (61) sur lequel le dispositif de prise d'image (52, 523) est prévu ; et
la structure de liaison (54, 542) est configurée pour relier l'autre partie d'extrémité du barillet de lentille (30) au substrat (51) de la section de dispositif de prise d'image (51, 52, 523) dans un état dans lequel la relation optiquement positionnelle entre le dispositif de prise d'image (62, 623) et le au moins un élément optique (41 à 47) est maintenue.

3. Appareil d'imagerie (10, 10', 102, 103) selon la revendication 1, dans lequel
la structure de liaison (54, 542) est configurée pour relier l'autre partie d'extrémité du barillet de lentille (30) au dispositif de prise d'image (52, 523) de la section de dispositif de prise d'image (51, 62, 623) dans un état dans lequel la relation optiquement positionnelle entre le dispositif de prise d'image (52, 523) et le au moins un élément optique (41 à 47) est maintenue.

4. Appareil d'imagerie (10, 10', 102, 103) selon l'une quelconque des revendications 1 à 3, dans lequel
la structure de liaison (54, 542) comprend une structure de liaison de remplissage ayant une couche de liaison de remplissage (C6) pour remplir un espace entre l'autre partie d'extrémité du barillet de lentille (30) et la section de dispositif de prise d'image (51, 52, 523) dans un état dans lequel le dispositif de prise d'image (52, 523) et le au moins un élément optique (41 à 47) sont disposés de manière optique.

5. Appareil d'imagerie (10, 10', 102, 103) selon l'une quelconque des revendications 1 à 3, dans lequel
la structure de liaison indirecte (54, 542) comprend en outre
une structure de liaison de remplissage ayant une couche de liaison de remplissage (C6) pour remplir un espace entre l'autre partie d'extrémité du barillet de lentille (30) et la section de dispositif de prise d'image (51, 52, 523), la structure de liaison de remplissage étant formée après avoir formé la structure de liaison indirecte.

6. Appareil d'imagerie (10, 10', 102, 103) selon l'une quelconque des revendications 1 à 5, dans lequel
la partie de paroi de montage (11) a une ouverture de pénétration étagée (11b) ayant deux formes circulaires concentriques lorsqu'elle est observée du côté de l'objet dans la direction de l'axe optique photographique (0) et une surface orthogonale (11h) orthogonale à l'axe optique photographique (0) au niveau d'une partie étagée de l'ouverture de pénétration étagée (11b) ;
le barillet de lentille (30) ayant un plus grand diamètre externe du côté de la une partie d'extrémité que du côté de l'autre partie d'extrémité, a une forme externe étagée et une surface orthogonale (34) orthogonale par rapport à l'axe optique photographique (0) au niveau d'une partie étagée entre le côté de la une partie d'extrémité et le côté de l'autre partie d'extrémité ; et
un élément d'étanchéité est agencé entre la surface orthogonale (11h) de la partie de paroi de montage (11) et la surface orthogonale (34) du barillet de lentille (30).

7. Appareil d'imagerie (10, 10', 102, 103) selon la revendication 6, comprenant en outre
une partie de retenue (37) prévue sur la surface circonférentielle externe du barillet de lentille (30) et est configurée pour faire tourner le barillet de lentille (30) autour de l'axe optique photographique (0) par rapport à la partie de paroi de montage (11) au niveau d'un côté interne de la partie de paroi de montage (11) dans un état dans lequel le barillet de lentille (30) est inséré dans l'ouverture de pénétration étagée (11b) de la partie de paroi de montage (11).

8. Appareil d'imagerie (10, 10', 102, 103) selon l'une quelconque des revendications 1 à 7, dans lequel
la structure de liaison (54, 542) comprend une structure de liaison indirecte ayant
un élément de retenue intermédiaire (54, 542) ayant une extrémité qui forme une surface de liaison du côté du barillet de lentille destinée à être reliée au barillet de lentille (30) et l'autre extrémité qui forme une surface de liaison du côté de réception de lumière destinée à être reliée à la section de dispositif de prise d'image (51, 52, 523),
la couche de liaison du côté du barillet de lentille (C4, C7) prévue sur la surface de liaison du côté du barillet de lentille, et
une couche de liaison du côté de réception de lumière (C5, C8) prévue sur la surface de liaison du côté de réception de lumière ; et
un élément de retenue intermédiaire (54, 542) a une forme annulaire pour entourer le dispositif de prise d'image (52, 523) autour de l'axe optique photographique (0).

9. Appareil d'imagerie (10, 10', 102, 103) selon l'une quelconque des revendications 1 à 7, dans lequel
la structure de liaison (54, 542) comprend une structure de liaison de remplissage ayant une couche de liaison de remplissage (C6) qui remplit un espace entre l'autre partie d'extrémité du barillet de lentille (30) et la section de dispositif de prise d'image (51, 52, 523) dans un état dans lequel le dispositif de prise d'image (52, 523) et le au moins un élément optique (41 à 47) sont positionnés de manière optique ; et
la couche de liaison de remplissage (C6) est formée par un adhésif ayant un effet de blocage de lumière.

10. Appareil d'imagerie (10, 10', 102, 103) selon l'une quelconque des revendications 1 à 9, comprenant en outre :
un élément en forme de boîte (13) ayant une extrémité destinée à être ouverte et configurée pour coopérer avec la partie de paroi de montage destinée à être reliée à la partie de paroi de montage (11) afin de former un boîtier (12) logeant le barillet de lentille (30) et le dispositif de prise d'image (62, 623).

11. Caméra embarquée comprenant :
l'appareil d'imagerie (10, 10', 102, 103) selon l'une quelconque des revendications 1 à 10.
